# FASCICULE DE BREVET EUROPEEN

(11) **EP 1 150 885 B1**
(45) Date de publication et mention de la délivrance du brevet: **07.01.2004**
(21) Numéro de dépôt: 00903443.0
(22) Date de dépôt: 04.02.2000
(51) Int. Cl.: B64F 5/00, H05B 3/00, F26B 3/30, F26B 3/28

(54) **APPAREIL ET METHODE DE CHAUFFAGE A DISTANCE PAR RAYONNEMENT DE LUMIERE**
VERFAHREN UND VORRICHTUNG ZUM HEIZEN MIT LICHTSTRAHLUNG
REMOTE LUMINOUS RADIATION HEATING METHOD AND DEVICE

(30) Priorité: 09.02.1999 CA 2260276
(43) Date de publication de la demande: 07.11.2001
(73) Titulaire: HYDRO-QUEBEC, Montréal Québec H2Z 1A4 (CA)
(72) Inventeur: COUTURE, Pierre, Boucherville, Québec J4B 4A4 (CA)
(74) Mandataire: Thébault, Jean-Louis
(86) Numéro de dépôt international: PCT/CA2000/000106
(87) Numéro de publication internationale: WO 2000/047471

(56) Documents cités:
- WO-A-98/56657
- FR-E- 55 186
- US-A- 2 610 280
- US-A- 5 597 140

## Description

### DOMAINE DE L'INVENTION

La présente invention concerne un appareil et une méthode de chauffage à distance par rayonnement de lumière, conformément au préambule de ces revendications 1 et 13.

### DESCRIPTION DE L'ART ANTÉRIEUR

Il existe dans l'art antérieur le brevet américain No. 2,610,280 de W. Wilson dans lequel est décrit un four utilisant des lampes comme sources de chaleur. Le four comprend des rangées de lampes reliées de façon pivotante à leurs bordures par des moyens permettant des ajustements angulaires relatifs.

De plus, il existe dans l'art antérieur plusieurs documents décrivant différents types d'appareils pour détecter et/ou déglacer des portions de glace sur une surface donnée.

Connu dans l'art antérieur, il y a le brevet américain No. 5,417,389 de CHEW et coll. dans lequel est décrit une méthode et un appareil pour déglacer un avion. La source de chaleur est générée par un appareil qui comprend un brûleur afin de chauffer une première surface. Cette première surface émet des infrarouges qui vont refléter sur une deuxième surface et ainsi, seront redirigées sur la surface à déglacer. De plus, ces appareils sont disposés sous le toit d'un hangar ou autre structure similaire.

Également connu dans l'art, il y a le brevet américain No. 4,378,755 de MAGNUSSON et coll. dans lequel est décrit un appareil pour déglacer un avion. Cet appareil comprend une rangée de dispositifs pour vaporiser un liquide ou un gaz ou pour irradier une surface disposée devant le dispositif. Cet appareil comprend également un système pour contrôler automatiquement la vaporisation ou l'irradiation selon la présence ou non d'une surface devant le dispositif.

Également connu dans l'art, il y a le brevet américain No. 5,597,140 de MADSEN dans lequel est décrit un appareil comprenant plusieurs sources de radiation infrarouge organisées en plusieurs rangées où chacune des rangées est montée sous le toit d'un hangar et est positionnée à un endroit donné sous le toit du hangar et à une hauteur désirée. Ce document décrit l'utilisation de ces sources lumineuses pour déglacer toute la surface d'un avion. Ces sources sont toujours utilisées en combinaison avec un hangar, de façon à réchauffer l'air ambiant du hangar.

Également connu dans l'art, il y a le brevet américain No. 4,379,217 de YOUMANS dans lequel est décrit une méthode et un appareil pour dégeler une surface donnée telle qu'un terrain ou un plan d'eau. Cet appareil pour dégeler est monté sous un hélicoptère. Cet appareil comprend plusieurs sources lumineuses montées côte à côte.

Également connu dans l'art, il y a le brevet américain No. 4,900,891 de VEGA et coll. dans lequel est décrit un système comprenant un assemblage qui génère un faisceau de laser. Cet assemblage comprend une lentille pour faire diverger un faisceau laser. De préférence, ce système comprend deux assemblages produisant chacun un faisceau unique et ces deux assemblages sont conjointement déplacés le long de la surface à déglacer et en l'occurrence, le long de l'aile d'un avion.

Connu dans l'art, il y a aussi le brevet américain No. 5,823,474 de NUNNALLY dans lequel est décrit un système pour détecter et déglacer la glace sur la surface d'un avion. Ce système utilise un rayon de laser unique pour déglacer une zone restreinte sur l'avion.

Connu dans l'art, il y a aussi le brevet américain No. 5,475,370 de STERN dans lequel est décrit un système pour détecter la glace ou la neige sur une surface métallique réfléchissante en utilisant une lumière polarisée.

Connu dans l'art, il y a aussi le brevet américain No. 5,484,121 de PADAWER et coll. dans lequel est décrit un système pour détecter la présence de glace sur un avion. Ce système est installé en permanence dans l'avion.

Les appareils ou méthodes de l'art antérieur permettent de chauffer un objet. Toutefois pour un nombre de lampes donné l'intensité de chauffage demeure limitée.

Un objet de la présente invention est de proposer un appareil et une méthode de chauffage d'un objet par rayonnement de lumière avec une plus grande intensité de chaleur que ce qui est possible avec les appareils et méthodes de l'art antérieur pour un même nombre de lampes.

### SOMMAIRE DE L'INVENTION

La présente invention vise un appareil de chauffage à distance par rayonnement de lumière, conformément à la revendication 1.

La présente invention vise aussi une méthode pour chauffer à distance par rayonnement de lumière, conformément à la revendication 13.

Les objets, avantages, et autres caractéristiques de la présente invention deviendront plus apparents à la lecture de la description non limitative qui suit de modes de réalisation préférentiels montrés dans les dessins ci-joints.

### BRÈVE DESCRIPTION DES DESSINS

La figure 1 est une vue de côté d'un appareil selon la présente invention.
La figure 2 est une vue de côté partielle de l'appareil montré à la figure 1, qui montre l'étalement de la lumière.
La figure 3 est une vue agrandie d'une partie de ce qui est montré à la figure 2.
La figure 4 est une vue de côté de l'appareil montré à la figure 1 dans une autre position d'opération.
La figure 5 est une vue agrandie d'une partie de ce qui est montré à la figure 4.
La figure 6 est une vue de ce qui est montré à la figure 5 dans une autre position d'opération.
La figure 7 est une vue agrandie d'une partie de ce qui est montré à la figure 6.
La figure 8 est une vue de dessus de ce qui est montré à la figure 3.
La figure 9 est une vue agrandie d'une partie de ce qui est montré à la figure 8.
La figure 10 est une vue de face de ce qui est montré aux figures 2 et 3.
La figure 11 est une vue de côté de ce qui est montré à la figure 10.
La figure 12 est une vue arrière de ce qui est montré à la figure 10.
La figure 13 est une vue de côté de ce qui est montré à la figure 12.
La figure 14 est une vue agrandie d'une partie de ce qui est montré à la figure 12.
La figure 15 est une vue agrandie d'une partie de ce qui est montré à la figure 13.
La figure 16 est une vue agrandie d'une partie de ce qui est montré à la figure 1.
La figure 17 est un schéma électrique d'un appareil selon la présente invention.
La figure 18 est une vue de côté d'une ampoule vissée dans une douille selon la présente invention.
La figure 19 est une vue en coupe d'un des éléments montrés à la figure 18.

### DESCRIPTION DES MODES DE RÉALISATION PRÉFÉRENTIELS

Dans la description qui suit les mêmes repères numériques désignent des éléments semblables. Les modes de réalisation montrés dans les figures sont préférentiels. Dans le contexte de la présente description, le terme "déglacer" veut dire faire fondre ou sublimer la glace et le mot "lumière" inclut la lumière visible et l'infrarouge.

Un des avantages particuliers de l'appareil et de la méthode selon la présente invention provient du fait que l'air absorbe très peu les photons de lumière, de sorte que l'on peut utiliser l'invention pour chauffer à distance par rayonnement de lumière lors de temps froid et maximiser la quantité d'énergie envoyée sur une pièce exposée à un flux de photons. Un autre avantage de l'appareil et de la méthode selon la présente invention provient du fait que les faisceaux de lumière sont insensibles aux courants d'air ambiants.

L'appareil est relativement facile d'entretien et son coût d'opération est modeste. Le fait de pouvoir dégivrer à distance permet d'accroître la sécurité pour le personnel qui effectue des travaux à l'extérieur par temps froid. Le présent appareil produit un flux d'énergie qui peut être utilisé entre autres, mais non exclusivement, pour fondre à distance la glace sur des pièces d'équipement d'une ligne de transport ou de distribution d'énergie électrique qu'elle soit sous tension ou hors tension, pour préchauffer des pièces d'équipement de ladite ligne, pour empêcher la formation de glace ou bien même pour faciliter le travail du personnel à l'extérieur durant l'hiver.

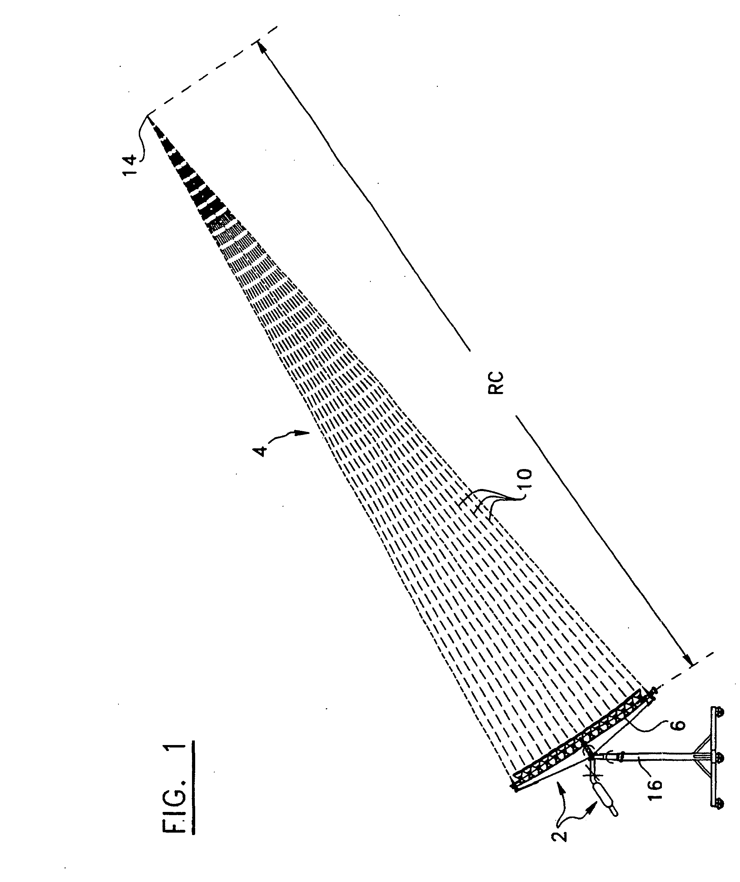

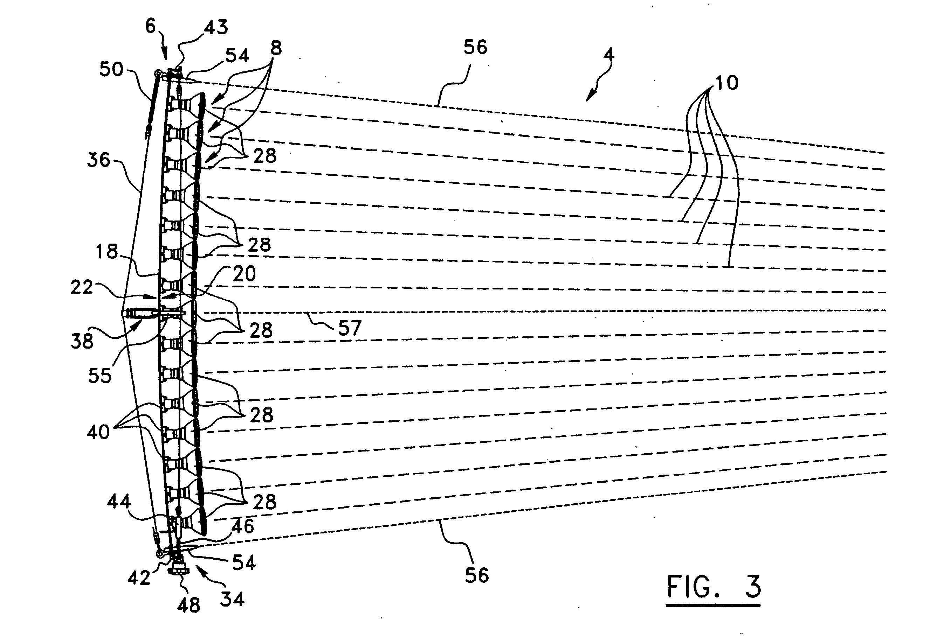

Si l'on se réfère maintenant aux figures 1 à 3, on peut voir une vue de côté d'un appareil (2) de chauffage à distance par rayonnement de lumière (4) selon la présente invention. L'appareil comprend un support, et des lampes (8) à faisceau étroit montées sur le support. Chacune des lampes (8) est apte à produire un faisceau lumineux ayant un axe central (10) de projection. L'appareil comprend aussi un dispositif de convergence coopérant avec le support et les lampes (8) pour orienter les lampes (8) de façon à faire converger les axes centraux (10) des faisceaux lumineux vers une zone focale (14) pour chauffer un objet (non montré). Le dispositif de convergence sera décrit plus en détail en faisant référence à la figure 3. Les axes centraux (10) des faisceaux lumineux produits par les lampes (8) convergent à une distance RC de manière à produire un flux d'énergie intense pour chauffer l'objet. Un support orientable (16) permet de diriger le flux vers l'endroit désiré.

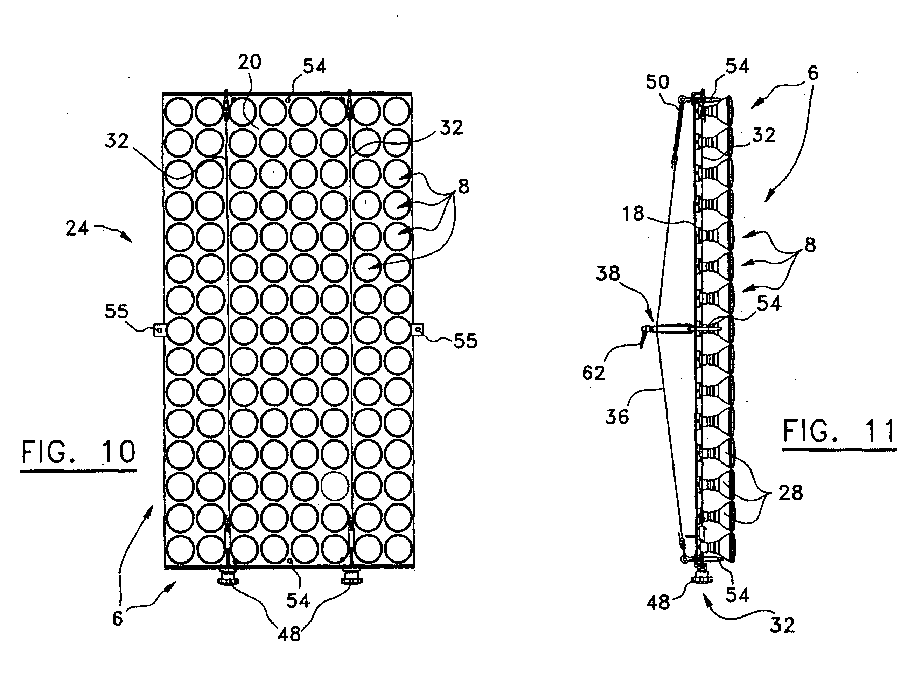

Selon un mode de réalisation préférentiel de l'invention, le support de lampes comprend préférablement une plaque flexible (18) ayant des surfaces opposées (20, 22) . Les lampes (8) sont disposées sur la surface (20) en au moins une rangée. De préférence, les lampes (8) sont disposées sur la surface (20) en une matrice de lignes et colonnes telle que montrée à la figure 10.

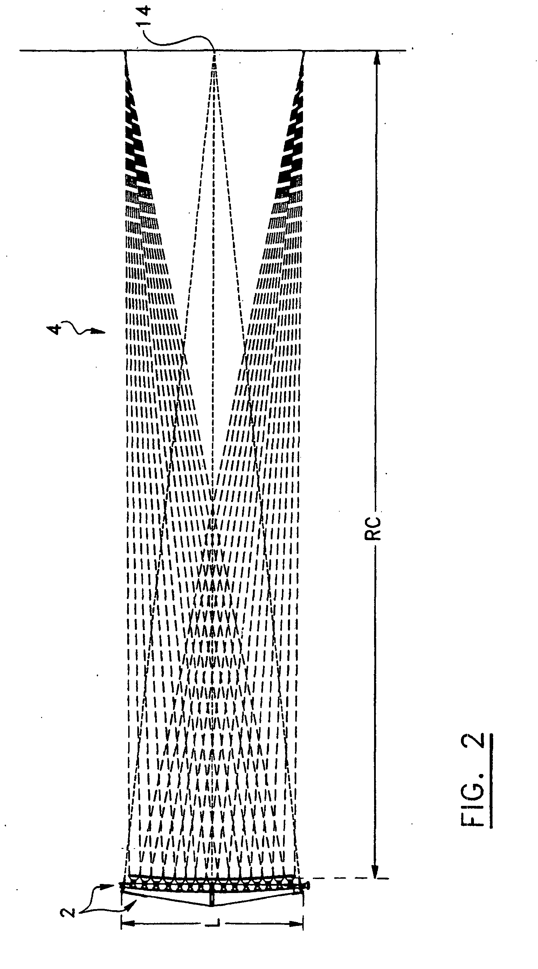

La projection de lumière produite par l'appareil (2) illustré sur cette figure 1 montre seulement les axes centraux (10) de projection des faisceaux lumineux produits par les lampes (8). Une représentation des faisceaux lumineux sera expliquée en faisant référence à la figure 2. Toutefois, cette figure 1 permet de montrer que les axes centraux (10) de projection des faisceaux lumineux viennent converger vers la zone focale (14) à une distance RC de l'appareil (2) pour produire un flux d'énergie intense.

Si l'on se réfère maintenant à la figure 2, on peut voir les faisceaux lumineux qui constituent la projection de lumière. Le rayon critique RC = L/(2tan(θ/2)) ou L est la longueur de la matrice de lampes (8) telle que montrée à la figure 10, et θ est l'angle d'ouverture de chacune des ampoules que contient la matrice de lampes (8). À titre d'exemple seulement, si l'on pose la longueur L comme étant égale à 1.895 m et que l'angle d'ouverture de chaque ampoule de chaque lampe est de 11.5° alors le rayon critique sera de 9.4 m. La section active au rayon critique SAC soit la surface effectivement éclairée sera égale à (1.895/2)² *π = 2.82 m². Dans le cas présent, la puissance de la matrice PM soit la puissance dégagée par l'ensemble des ampoules est de 12 kW et la densité de puissance à la source FS est donc de 12 kW/(longueur de la matrice*largeur de la matrice). Pour une largeur de matrice de 1.01 m, la densité de puissance à la source FS sera de 6.26 kW/m².

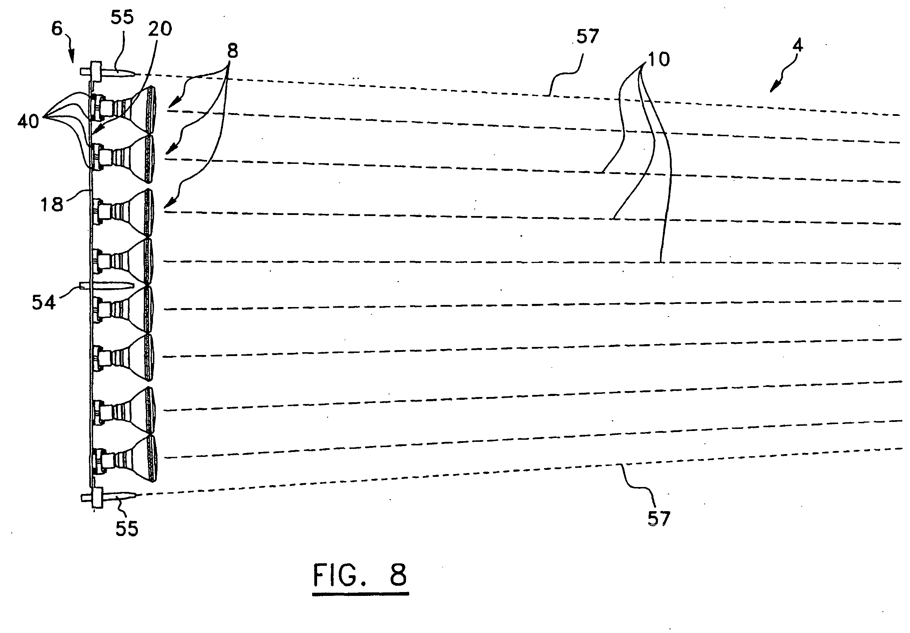

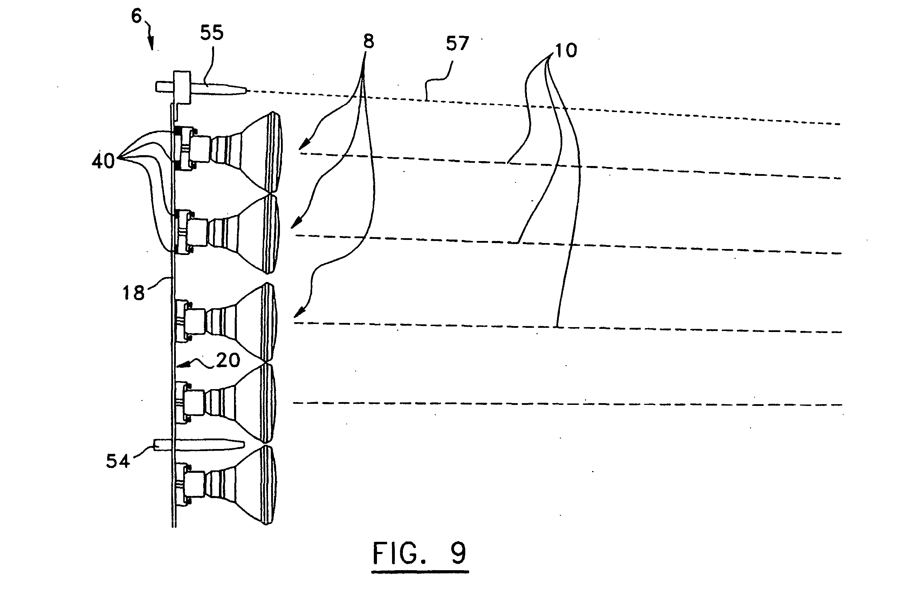

Si l'on se réfère maintenant aux figures 3, 10 et 11, le support de lampes comprend de préférence une plaque flexible (18) ayant des surfaces opposées (20,22). Préférablement, les lampes (8) sont disposées sur la surface (20) en une matrice de lignes et colonnes (montrée à la figure 10). Le dispositif de convergence permet de modifier la courbure de la plaque flexible (18) pour ainsi faire converger les axes centraux (10) des faisceaux lumineux produits par les lampes (8) pour chauffer un objet (non montré). Le dispositif de convergence comprend au moins un câble de tension (32), un dispositif de tension (34), au moins une paire de câbles de stabilisation (36) parallèles, un dispositif de blocage (38), et des éléments d'ajustement qui seront décrits plus en détail en référence aux figures 8 et 9.

De préférence, le dispositif de convergence comprend deux câbles de tension (32), chaque câble de tension (32) s'étendant le long de la surface (20) parallèlement aux colonnes de lampes (8) et ayant des extrémités opposées fixées à la plaque (18), tel que mieux illustré aux figures 10 et 11. Le dispositif de tension (34) est utilisé pour tendre chaque câble de tension (32) et ainsi faire fléchir la plaque (18) de sorte que la surface (20) de la plaque (18) prenne une forme concave pour faire converger les axes centraux (10) des faisceaux lumineux des lampes (8) de chacune des colonnes vers une zone focale.

De préférence, le dispositif de tension (34) comprend un élément (42) en forme de L ayant une première aile fixée sur la plaque (18) et une deuxième aile pourvue d'un trou; une tige (44) ayant une première extrémité fixée à une des extrémités du câble de tension (32) et une deuxième extrémité comprenant une cavité filetée; et une vis (46) passant à travers le trou de la deuxième aile, la vis (46) ayant une première extrémité coopérant avec la cavité filetée de la tige (44) et une deuxième extrémité munie d'une poignée (48) prenant appui sur la deuxième aile. La poignée (48) permet à un utilisateur de visser la vis (46) dans la cavité filetée pour ainsi ajuster la tension dans le câble de tension (32) de façon à faire fléchir la plaque (18). L'autre extrémité du câble de tension (32) est fixée à la plaque au moyen d'un autre élément (43) en forme de L.

Si l'on se réfère maintenant aux figures 3, 12 et 13, de préférence, le dispositif de convergence comprend également deux paires de câbles de stabilisation (36) parallèles s'étendant le long de la surface (22) parallèlement aux colonnes de lampes (8). Chacun des câbles (36) comporte une première extrémité munie d'un ressort (50) fixé à la plaque (18) et une seconde extrémité également fixée à la plaque (18).. Des dispositifs de blocage (38) sont prévus pour bloquer une section de chaque câble (36) par rapport à la plaque (18) pour ainsi stabiliser la forme concave de la surface (20). Les ressorts (50) de chaque paire de câbles de stabilisation (36) sont situés de part et d'autre du dispositif de blocage (38) correspondant.

Si l'on se réfère maintenant aux figures 3, 8 et 9, de préférence, une première paire de lasers (54) est prévue pour déterminer à quelle distance se trouve la zone focale (14) montrée aux figures 1 et 2 sans avoir à allumer la matrice de lampes (8) pendant qu'un opérateur règle le degré de courbure de la plaque flexible (18). Plus spécifiquement, la première paire de lasers (54) est montée sur la plaque (18) de façon à être alignée parallèlement aux colonnes de lampes (8) et apte à produire des rayons lasers (56) orientés de la même façon que les axes centraux (10) de projection des faisceaux des lampes (8) des colonnes pour permettre de déterminer par une convergence des rayons lasers (56) la distance entre la première zone focale (14) et l'appareil (2).

De préférence aussi, une deuxième paire de lasers (55) est montée sur la plaque (18) de façon à être alignée parallèlement aux lignes de lampes (8) et apte à produire des rayons lasers (57) orientés de la même façon que les axes centraux (10) de projection des faisceaux lumineux des lampes (8) des lignes pour permettre de déterminer par une convergence des rayons lasers (57) produits par la deuxième paire de lasers (55) la distance entre une seconde zone focale et l'appareil (2), de façon à pouvoir chauffer à distance par rayonnement de lumière (4) selon deux modes de convergence.

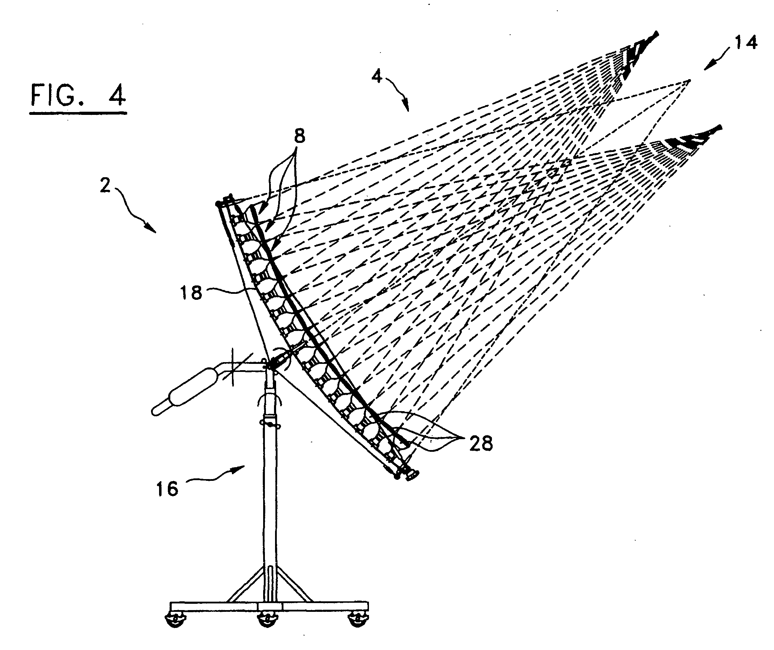

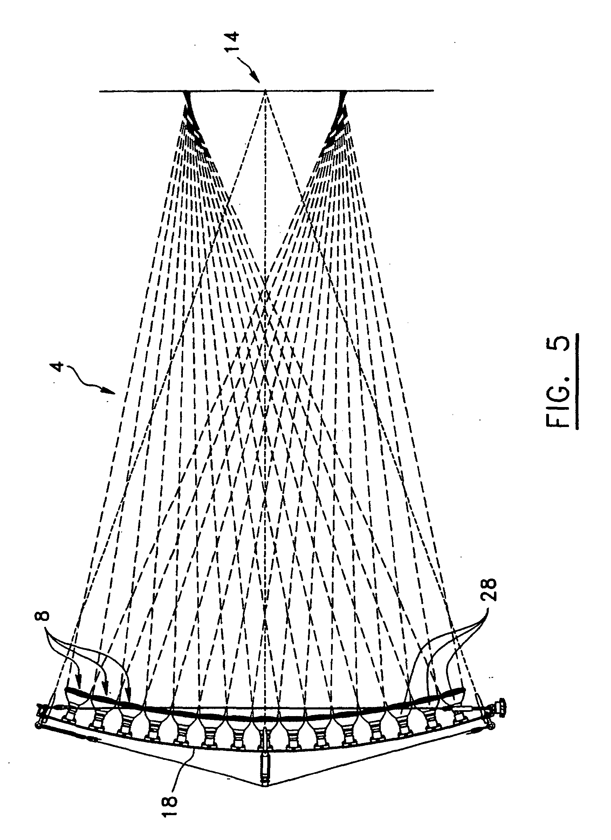

Si l'on se réfère maintenant à la figure 4, on montre l'appareil (2) dans une position d'opération extrême c'est-à-dire que la courbure de la plaque flexible (18) est à son maximum et l'on obtient dans le cas présent une distance focale minimale FM. Cette position extrême est déterminée par la distance entre les lampes (8) et par la dimension des lampes (8). Comme on peut le voir sur cette figure 4 et également sur la figure 5 qui est une représentation agrandie d'une partie de ce qui est montré sur la figure 4, la circonférence externe des ampoules (28) se touche c'est donc dire qu'il n'est plus possible de courber davantage la plaque flexible (18).

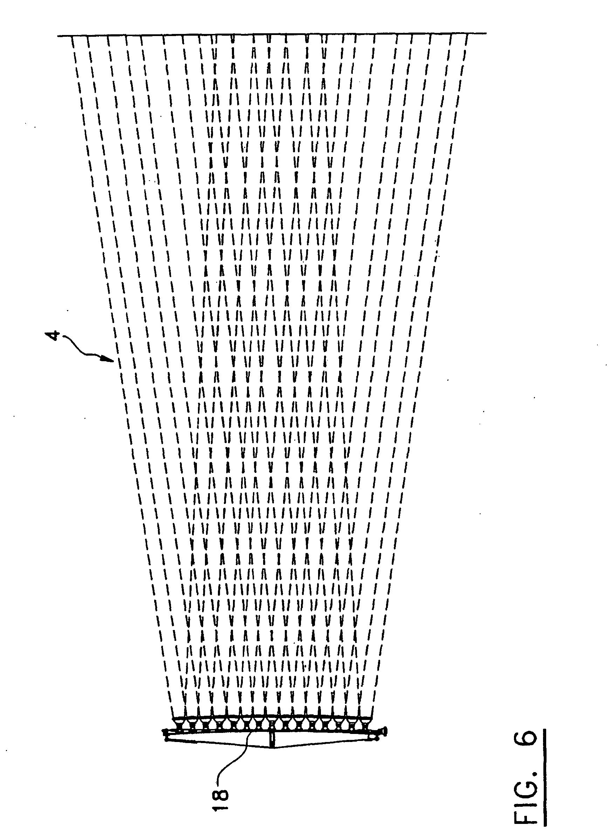

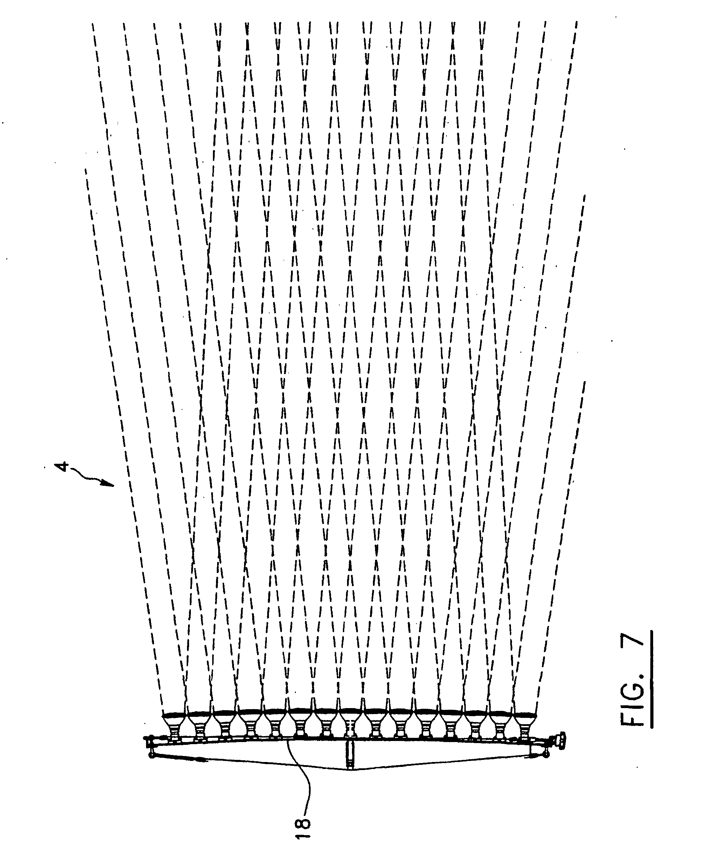

Si l'on se réfère maintenant aux figures 6 et 7, on peut voir une autre position d'opération de l'appareil (2) où la plaque flexible (18) est courbée selon un sens opposé de ce qui est montré aux figures 4 et 5, ce qui permet de faire diverger la lumière. Ce genre de position d'opération est utile lorsque l'on veut par exemple produire un éclairage.

Si l'on se réfère maintenant aux figures 8 et 9, de préférence, des éléments d'ajustement (40) sont montés entre les lampes (8) et la plaque (18) pour orienter lesdites lampes (8) de chacune des lignes de la matrice par rapport à la surface (20) de la plaque (18) de façon à faire converger les axes centraux (10) des faisceaux lumineux des lampes (8) de chaque ligne vers la seconde zone focale différente de celle montrée aux figures 1 et 2.

La convergence des axes centraux (10) des faisceaux lumineux des lampes (8) de chaque ligne vers la seconde zone focale n'est pas produite par une courbure de la plaque flexible (18) mais plutôt par des éléments d'ajustement (40) qui permettent d'orienter les lampes (8) de chacune des lignes par rapport à la surface (20) de la plaque flexible (18). Les éléments d'ajustement (40) comprennent des rondelles (40) montées de façon amovible entre chaque lampe (8) et la surface (20) du support de lampes. Comme on peut le voir, les lampes (8) situées au centre de la plaque (18) sont montées directement sur la plaque flexible (18) sans rondelles (40) d'ajustement. Pour chaque ligne de lampes, plus on se dirige vers la périphérie, plus il y a de rondelles (40) d'ajustement qui sont utilisées pour orienter la direction de projection de chaque lampe (8). Il est donc facile de voir que la distance entre la seconde zone focale et la matrice de lampes (8) ne peut pas être ajustée facilement lors de l'utilisation de l'appareil (2) puisqu'elle est fixée d'avance lors du montage des lampes (8) sur la plaque flexible (18). Cette distance de focalisation est préalablement fixée d'avance au rayon critique RC désiré.

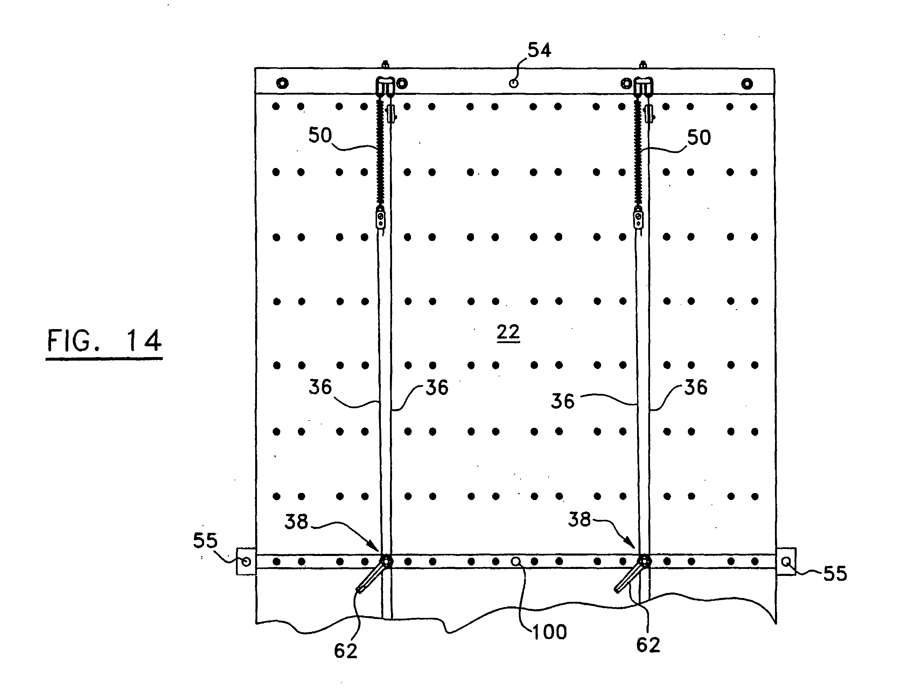

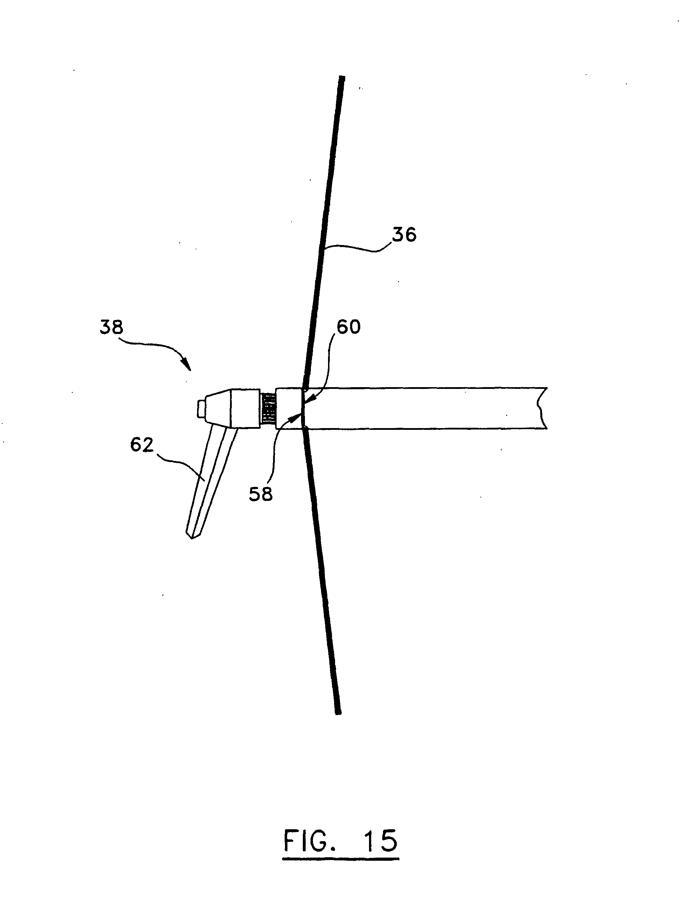

Si l'on se réfère maintenant aux figures 14 et 15, on peut voir que les dispositifs de blocage (38) sont montés sur la surface (22) de la plaque. Chaque dispositif de blocage (38) comprend une mâchoire femelle (58), une mâchoire mâle (60) vissée dans la mâchoire femelle (58) et une poignée (62) pour serrer les câbles de stabilisation (36) entre les mâchoires mâle et femelle (60, 58) en les vissant une par rapport à l'autre. Les poignées (62) permettent d'immobiliser les câbles (36). Il se trouve donc à y avoir de part et d'autre de chaque dispositif de blocage une partie de câble de stabilisation (36) sans ressort qui fixe la plaque flexible (18) en position stable selon une courbure donnée.

En se référant maintenant aux figures 1 à 3 et 10 à 15, nous allons expliquer comment l'opérateur peut ajuster la courbure de la plaque flexible (18) pour modifier la distance à laquelle se trouve la zone focale (14) de l'appareil (2). Premièrement, à l'aide des poignées (48) des dispositifs de tension (34), l'opérateur règle le degré de courbure de la plaque (18) en vissant chaque vis (46) dans la cavité filetée de la tige (44) correspondante pour ainsi tendre chaque câble de tension (32) avec plus ou moins de force. La tension dans chaque câble de tension (32) force la plaque (18) à fléchir selon une forme concave et les câbles de stabilisation (36) s'ajustent conséquemment en longueur compte tenu du ressort (50) que possède chacun d'eux. Selon un mode d'opération, les lasers (54) sont d'abord activés pour permettre à l'opérateur de voir par une convergence de rayons lasers (56) où se trouve la zone focale (14). Ensuite, lorsque la zone focale (14) se trouve à la distance voulue, chaque câble de stabilisation (36) est immobilisé entre les mâchoires mâle et femelle (60, 58) correspondantes à l'aide des poignées (62).

Tel que mieux illustré aux figures 14 et 15, il se trouve à y avoir de part et d'autre de chaque poignée (62) une partie de câble (36) qui est sans ressort. Une fois immobilisées, chaque paire de câbles de stabilisation (36) empêche donc ainsi la plaque (18) de fléchir davantage et les câbles de tension (32) empêchent la plaque (18) de se redresser. Ainsi, ce système de câbles de tension (32) et de stabilisation (36) permet de fixer la plaque (18) en position stable selon une courbure donnée.

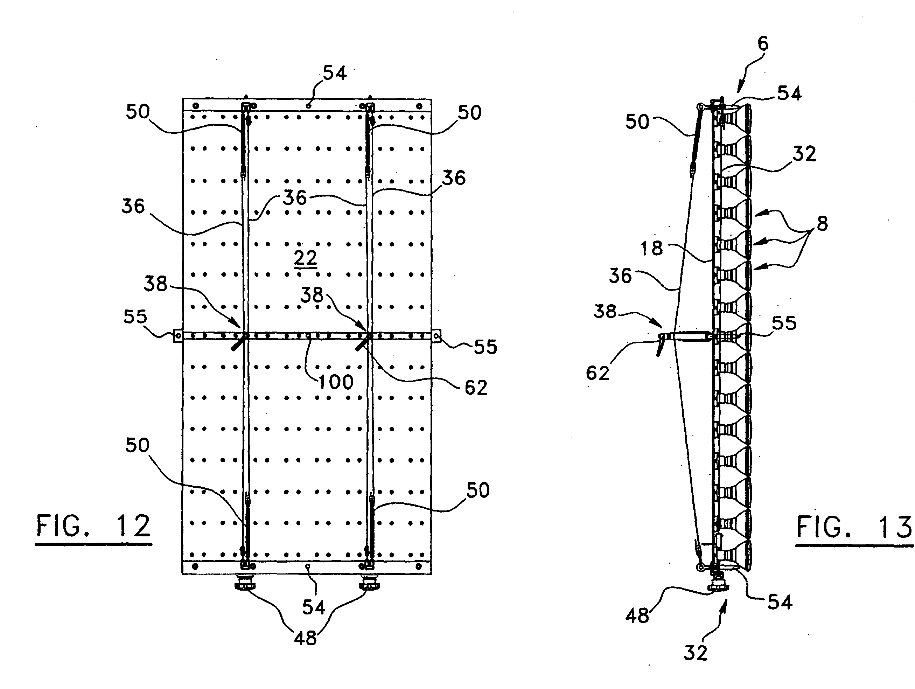

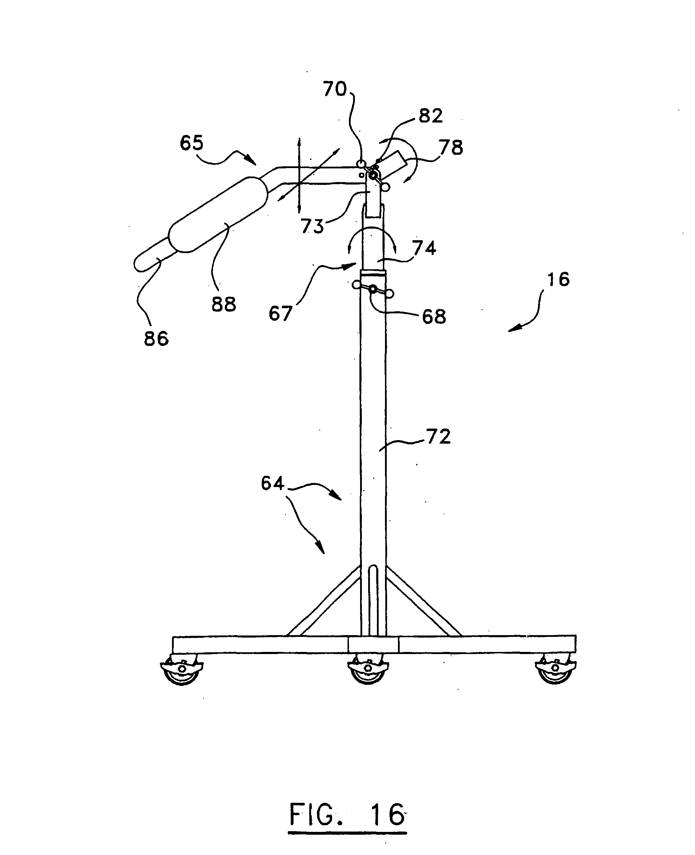

Si l'on se réfère maintenant à la figure 16, on peut voir le support orientable (16) qui supporte le panneau (6) de lumière montré par exemple à la figure 1. Le support orientable (16) comprend une base (64), un dispositif d'articulation comportant deux parties (65, 67) et deux dispositifs de verrouillage (68, 70). La base (64) est montée sur des roues et comprend un membre cylindrique (72). Le dispositif d'articulation comprend une première partie (67) ayant une première extrémité cylindrique (74) apte à coulisser par rapport au membre cylindrique (72) de la base (64). Le dispositif d'articulation comprend également une autre partie (65) ayant une extrémité cylindrique (78) apte à recevoir un élément de connexion (100) cylindrique du support de lampes montré aux figures 12 et 14, une partie intermédiaire connectée à une seconde extrémité (73) de la première partie (67) par un axe de pivot (82), et une seconde extrémité munie d'une poignée (86) et d'un contrepoids (88).

Le dispositif de verrouillage (68) sert à verrouiller la première extrémité (74) par rapport au membre cylindrique (72) de la base (64). Le dispositif de verrouillage (70) sert à verrouiller la première partie (67) par rapport à la seconde partie (65) du dispositif d'articulation via l'axe de pivot (82).

Ce support orientable (16) permet de pivoter le panneau selon trois directions données c'est donc dire que l'on peut diriger le panneau de lampes dans n'importe quelle direction et le contrepoids (88) permet à l'utilisateur de facilement manipuler le panneau. Le support orientable (16) peut être orienté de façon manuelle ou pourrait également être orienté de façon motorisée, de façon à pouvoir l'opérer à distance.

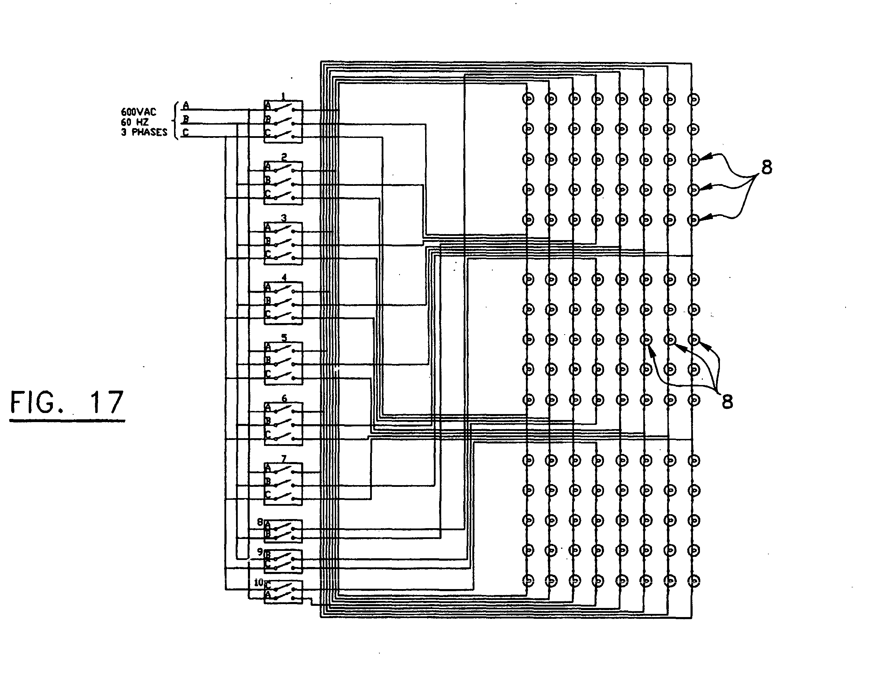

Si l'on se réfère maintenant à la figure 17, on voit un schéma électrique qui montre comment les lampes (8) sont branchées à l'alimentation. On peut également prévoir un commutateur séparé pour alimenter certaines lampes (8) de la matrice de manière à pouvoir localiser la tache de lumière projetée par le panneau avant la mise en service de l'ensemble de la matrice de lampes (8). De plus, tel que mentionné plus tôt, un système indépendant de lampes à faisceau très étroit ou de lasers peut être prévu pour pouvoir ajuster la matrice de lampes (8) et localiser la tache de lumière avant la mise en service de l'ensemble des lampes (8) de la matrice.

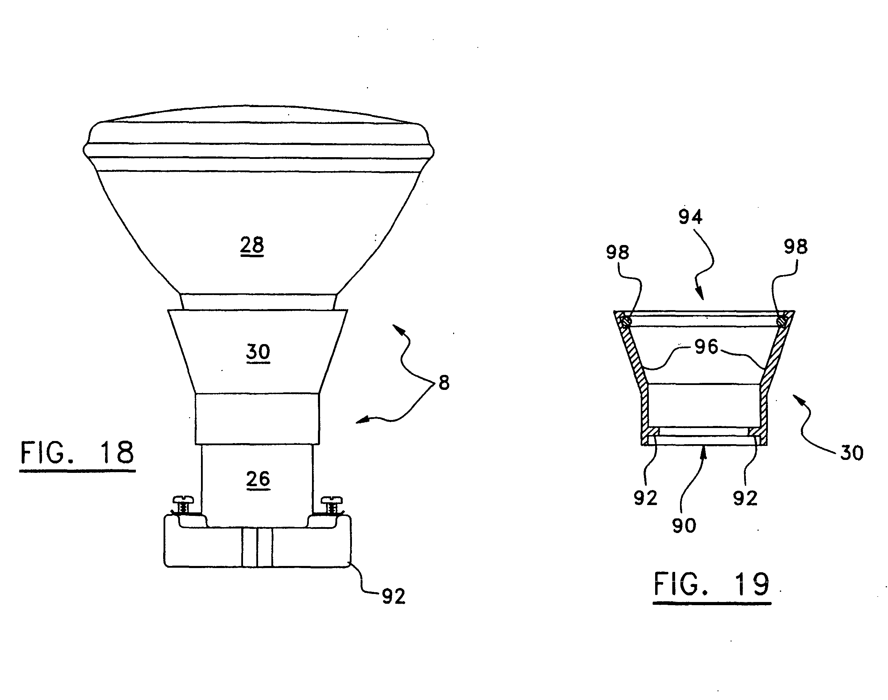

Si l'on se réfère maintenant aux figures 18 et 19, on peut voir que chaque lampe (8) comprend une douille (26), une ampoule (28) vissée dans la douille (26) et un corps tubulaire (30) . Le corps tubulaire (30) comporte une extrémité cylindrique (90) munie d'une butée (92) apte à coopérer avec la douille (26) correspondante, et une extrémité évasée (94) ayant une paroi interne (96) munie d'une rondelle périphérique (98), la paroi interne (96) étant apte à recevoir l'ampoule (28). Le corps tubulaire (30) sert à aligner l'ampoule (28) par rapport à la douille (26).

À titre d'exemple seulement, l'appareil (2) selon le mode de réalisation préférentiel montré dans les figures 1 à 19 est caractérisé de la manière suivante. La densité de puissance théorique, en considérant qu'il n'y a aucune perte d'énergie, au rayon critique FRC est égale à 4.25 kW/m². La tension de l'opération de la matrice (24) VM est de 600 V. Le coût d'opération électrique C de la matrice (24) est de 0.75$/heure pour 1 kw•heure = 0.05$. Le nombre de lampes (8) dans le sens de la longueur de la matrice est 15 et dans le sens de la largeur de la matrice est de 8. L'angle d'ouverture de chaque ampoule (28) est caractérisé par l'angle θ qui est de 11.5°. La puissance de chaque lampe (8) PL est de 100 W et la tension de chaque lampe (8) PL est de 120 V. En choisissant des ampoules (28) avec des angles d'ouverture plus petits on peut augmenter le rayon critique RC montré à la figure 1.

Selon la présente invention, il y a aussi une méthode pour chauffer à distance par rayonnement de lumière. Pour décrire cette méthode, on va se référer aux figures 1 à 3. La méthode comprend les étapes d'alimenter des lampes (8) à faisceau étroit montées sur le support de lampes, chacune des lampes (8) étant apte à produire un faisceau lumineux ayant un axe central (10) de projection, et d'orienter les lampes (8) au moyen du support de lampes de façon à faire converger les axes centraux (10) des faisceaux lumineux produits par les lampes (8) vers une première zone focale pour chauffer un objet.

En se référant maintenant aux figures 1 à 3, 10, 11, 12 et 13, selon un mode de réalisation préférentiel, l'étape d'orienter comprend les étapes suivantes (a) tendre les câbles de tension (32), et (b) bloquer une section de chacun des câbles de stabilisation (36) par rapport à la plaque (18) pour ainsi stabiliser la forme concave de la première surface (20). De préférence, ce mode de réalisation préférentiel peut également comprendre en outre l'étape d'activer les deux lasers (54) montés sur la plaque flexible (18) pour permettre de déterminer par une convergence des rayons lasers (56) la distance entre la zone focale (14) et le support de lampes.

En se référant maintenant aux figures 8 et 9, l'étape d'orienter peut également comprendre l'étape de monter les lampes (8) sur la surface (20) du support de lampes en disposant des éléments d'ajustement (40) entre les lampes (8) et la surface (20) du support de lampes de façon à faire converger les axes centraux (10) des faisceaux lumineux vers une seconde zone focale.

En se référant maintenant aux figures 3, 8 et 9, de préférence, un autre mode de réalisation préférentiel comprend en outre les étapes d'activer la paire de lasers (54) montée sur la plaque flexible (18) pour produire des rayons lasers (56) orientés de la même façon que les axes centraux (10) de projection des faisceaux lumineux des lampes (8) des colonnes pour permettre de déterminer par une convergence des rayons lasers (56) la distance entre une première zone focale et le support de lampes; et d'activer une seconde paire de lasers (55) montée sur la plaque flexible (18) pour produire des rayons lasers (57) orientés de la même façon que les axes centraux (10) de projection des faisceaux lumineux des lampes (8) des lignes pour permettre de déterminer par une convergence des rayons lasers (55) la distance entre la seconde zone focale et le support de lampes.

La présente invention présente plusieurs avantages sur l'art antérieur et peut être utilisée de différentes façons. La présente invention permet entre autres mais non exclusivement de dégivrer, déglacer ou réchauffer des objets, installations ou personnes se trouvant exposés à des températures extérieures froides. Un autre avantage de la présente invention est de permettre de déglacer à distance sans contact mécanique ou électrique des pièces d'équipement sous tension de lignes de transport ou de distribution d'énergie électrique comme par exemple des sectionneurs. Un autre avantage de la présente invention est de permettre de déglacer à partir du sol des pièces d'équipement de lignes de transport ou de distribution d'énergie électrique, localisées en hauteur sous ou hors tension électrique, comme par exemple des transformateurs, des sectionneurs, une tour de transmission ou bien même une tour de communication. Un autre avantage de la présente invention est de déglacer à distance sans compromettre la sécurité du personnel par rapport à des chutes de glace possibles ou la tension électrique.

De plus, la présente invention permet également de préchauffer une pièce d'équipement comme par exemple un sectionneur par temps froid avant d'effectuer des travaux. La présente invention permet également de réchauffer le personnel travaillant à l'extérieur pendant les travaux exécutés par temps froid. La présente invention permet aussi d'empêcher la formation de glace ou de dégivrer des traverses électriques de postes de distribution à l'hexafluorure de soufre. La présente invention pourrait permettre également de briser certains matériaux fragiles par expansion différentielle par exemple des roches.

Un autre avantage de la présente invention est de permettre d'éclairer le personnel pendant l'exécution de travaux effectués à l'extérieur pendant la nuit. Un autre avantage de la présente invention est de proposer un appareil (2) et une méthode pour réchauffer par rayonnement de lumière (4), qui peuvent être mis en opération avec un faible coût d'opération, un faible coût d'entretien, et un faible coût d'achat. Un autre avantage de la présente invention est de proposer un appareil pour réchauffer par rayonnement de lumière, qui est facile d'entretien et qui peut être facilement monté sur un camion de service. L'appareil peut être monté à bord d'un camion de service et alimenté par une génératrice auxiliaire ou alimenté par une génératrice entraînée par le PTO de la transmission du camion de service.

Plusieurs appareils peuvent être utilisés ensemble côte-à-côte pour produire une zone focale allongée selon un axe en focalisant les faisceaux des différents appareils à différentes distances adjacentes le long de l'axe.

Bien que la présente invention ait été précédemment expliquée par le biais de réalisations préférentielles de celle-ci, il doit être précisé que toute modification à ces réalisations préférentielles, à l'intérieur du cadre des revendications jointes, n'est pas considérée changer ni altérer la nature et la portée de la présente invention.

## Revendications

1. Appareil (2) de chauffage à distance par rayonnement de lumière (4), l'appareil (2) comprenant un support, et des lampes (8) montées sur le support, chacune des lampes (8) étant apte à produire un faisceau lumineux ayant un axe central (10) de projection, les lampes (8) étant disposées sur le support en une matrice (24) de lignes et colonnes, l'appareil comprenant des premiers moyens de convergence coopérant avec le support et les lampes (8) de chaque colonne pour les orienter de façon à faire converger les axes centraux (10) de leurs faisceaux lumineux vers une première zone;
l'appareil (2) étant **caractérisé en ce que** les lampes (8) sont à faisceau étroit, et **en ce qu'**il comprend en outre des seconds moyens de convergence coopérant avec le support et les lampes (8) de chaque ligne pour les orienter de façon à faire converger les axes centraux (10) de leurs faisceaux lumineux vers une seconde zone, les axes centraux (10) des faisceaux lumineux des lampes (8) des colonnes et des lignes convergeant respectivement vers les première et seconde zones pour chauffer un objet à distance.

2. L'appareil (2) selon la revendication 1, **caractérisé en ce que** :
les premiers et seconds moyens de convergence sont aptes à faire converger les axes centraux des faisceaux lumineux vers des première et seconde zones focales;
le support comprend une plaque flexible (18) ayant des première et seconde surfaces opposées (20,22); et
les premiers moyens de convergence comprennent:
un câble de tension (32) s'étendant le long de la première surface (20) parallèlement aux colonnes de lampes (8), le câble de tension (32) ayant des extrémités opposées fixées à la plaque (18);
des moyens de tension (34) pour tendre le câble de tension (32) et ainsi faire fléchir la plaque (18) de sorte que la première surface (20) prenne une forme concave pour orienter les lampes de chacune des colonnes vers la première zone focale;
deux câbles de stabilisation (36) parallèles s'étendant le long de la seconde surface (22) parallèlement aux colonnes de lampes (8), chacun des câbles de stabilisation (36) ayant une première extrémité munie d'un ressort (50) fixé à la plaque (18) et une seconde extrémité également fixée à la plaque (18); et
des moyens de blocage (38) pour bloquer une section de chaque câble de stabilisation (36) par rapport à la plaque (18) pour ainsi stabiliser la forme concave de la première surface (20), les ressorts (50) des deux câbles de stabilisation (36) étant situés de part et d'autre des moyens de blocage (38).

3. L'appareil (2) selon la revendication 1, **caractérisé en ce que**:
les premiers et seconds moyens de convergence sont aptes à faire converger les axes centraux des faisceaux lumineux vers des première et seconde zones focales; et
les seconds moyens de convergence comprennent des éléments d'ajustement (40) montés entre les lampes (8) et une surface (20) du support pour orienter les lampes (8) de chacune des lignes par rapport à cette surface (20) vers la seconde zone focale.

4. L'appareil (2) selon la revendication 2 ou 3, **caractérisé en ce qu'**il comprend en outre deux lasers (54) montés sur le support de façon à être alignés parallèlement aux colonnes de lampes (8) et aptes à produire des rayons lasers (56) orientés de la même façon que les axes centraux (10) de projection des faisceaux lumineux des lampes (8) des colonnes pour permettre de déterminer par une convergence des rayons lasers (56) la distance entre la première zone focale et l'appareil (2) .

5. L'appareil (2) selon la revendication 2 ou 3, **caractérisé en ce qu'**il comprend en outre deux lasers (55) montés sur le support de façon à être alignés parallèlement aux lignes de lampes (8) et aptes à produire des rayons lasers (57) orientés de la même façon que les axes centraux (10) de projection des faisceaux lumineux des lampes des lignes pour permettre de déterminer par une convergence des rayons lasers (57) la distance entre la deuxième zone focale et l'appareil (2) .

6. L'appareil (2) selon la revendication 1, **caractérisé en ce que** :
les premiers et seconds moyens de convergence sont aptes à faire converger les axes centraux des faisceaux lumineux vers des première et seconde zones focales; et
le support comprend une plaque flexible (18) ayant des première et seconde surfaces opposées (20,22);
les lampes (8) sont disposées sur la première surface (20);
les premiers moyens de convergence comprennent:
un câble de tension (32) s'étendant le long de la première surface (20) parallèlement aux colonnes de lampes (8), le câble de tension (32) ayant des extrémités opposées fixées à la plaque (18);
des moyens de tension (34) pour tendre le câble de tension (32) et ainsi faire fléchir la plaque (18) de sorte que la première surface (20) prenne une forme concave pour orienter les lampes (8) de chacune des colonnes vers la première zone focale;
deux câbles de stabilisation (36) parallèles s'étendant le long de la seconde surface (22) parallèlement aux colonnes de lampes (8), chacun des câbles de stabilisation (36) ayant une première extrémité munie d'un ressort (50) fixé à la plaque (18) et une seconde extrémité également fixée à la plaque (18); et
des moyens de blocage (38) pour bloquer une section de chaque câble de stabilisation (36) par rapport à la plaque (18) pour ainsi stabiliser la forme concave de la première surface .(20) , les ressorts (50) des deux câbles de stabilisation (36) étant situés de part et d'autre des moyens de blocage (38); et
les seconds moyens de convergence comprennent des éléments d'ajustement (40) montés entre les lampes (8) et la plaque (18) pour orienter les lampes (8) de chacune des lignes par rapport à la première surface (20) de la plaque (18) vers la seconde zone focale.

7. L'appareil (2) selon la revendication 2, **caractérisé en ce que** les moyens de tension (34) comprennent :
un élément (42) en forme de L ayant une première aile fixée sur la plaque (18) et une deuxième aile pourvue d'un trou;
une tige (44) ayant une première extrémité fixée à une des extrémités du câble de tension (32) et une deuxième extrémité comprenant une cavité filetée; et
une vis (46) passant à travers le trou de la deuxième aile, ladite vis (46) ayant une première extrémité coopérant avec la cavité filetée de la tige (44) et une deuxième extrémité munie d'une poignée (48) prenant appui sur la deuxième aile, ladite poignée (48) permettant à un utilisateur de visser la vis (46) dans la cavité filetée pour ainsi ajuster la tension dans le câble de tension (32) de façon à faire fléchir la plaque (18).

8. L'appareil (2) selon la revendication 2 ou 6, **caractérisé en ce que** les moyens de blocage (38) sont montés sur la seconde surface (22) de la plaque (18) et comprennent une mâchoire femelle (58), une mâchoire mâle (60) vissée dans la mâchoire femelle (58) et une poignée (62) pour serrer les câbles de stabilisation (36) entre les mâchoires mâle et femelle (60,58) en vissant lesdites mâchoires (60,58) une par rapport à l'autre.

9. L'appareil (2) selon la revendication 3 ou 6, **caractérisé en ce que** les éléments d'ajustement (40) comprennent des rondelles montées de façon amovible entre chaque lampe (8) et la surface (20) du support.

10. L'appareil (2) selon la revendication 6, **caractérisé en ce qu'**il comprend en outre:
une première paire de lasers (54) montée sur la plaque (18) de façon à être alignée parallèlement aux colonnes de lampes (8) et apte à produire des rayons lasers (56) orientés de la même façon que les axes centraux (10) de projection des faisceaux lumineux (8) des colonnes pour permettre de déterminer par une convergence des rayons lasers (56) la distance entre la première zone focale et l'appareil (2) ; et
une deuxième paire de lasers (55) montée sur la plaque (18) de façon à être alignée parallèlement aux lignes de lampes (8) et apte à produire des rayons lasers (57) orientés de la même façon que les axes centraux (10) de projection des faisceaux lumineux des lampes (8) des lignes pour permettre de déterminer par une convergence des rayons lasers (57) produits par la deuxième paire de lasers (55) la distance entre la deuxième zone focale et l'appareil (2).

11. L'appareil (2) selon l'une des revendications 1 à 10, **caractérisé en ce qu'**il comprend en outre:
une base (64) montée sur des roues et comprenant un membre cylindrique (72);
un dispositif d'articulation comprenant:
une première partie (67) ayant une première extrémité cylindrique (74) apte à coulisser par rapport au membre cylindrique (72) de la base (64); et
une deuxième partie (65) ayant une première extrémité cylindrique (78) apte à recevoir un élément de connexion (100) cylindrique du support, une partie intermédiaire connectée à une seconde extrémité (73) de la première partie (67) par un axe de pivot (82), et une seconde extrémité munie d'une poignée (86) et d'un contrepoids (88);
un premier moyen de verrouillage (68) pour verrouiller la première extrémité (74) de la première partie (67) par rapport au membre cylindrique (72) de la base (64); et
un second moyen de verrouillage (70) pour verrouiller la première partie (67) par rapport à la seconde partie (65) via l'axe de pivot (82).

12. L'appareil (2) selon l'une des revendications 1 à 11, **caractérisé en ce que** chaque lampe (8) comprend une douille (26), une ampoule (28) vissée dans la douille (26), et un corps tubulaire (30) ayant une extrémité cylindrique (90) munie d'une butée (92) apte à coopérer avec la douille (26) correspondante, et une extrémité évasée (94) ayant une paroi interne (96) munie d'une rondelle périphérique (98), la paroi interne (96) étant apte à recevoir l'ampoule (28), le corps tubulaire (30) servant à aligner l'ampoule (28) par rapport à la douille (26).

13. Méthode pour chauffer à distance par rayonnement de lumière (4), la méthode comprenant l'étape d'alimenter des lampes (8) montées sur un support, chacune des lampes (8) étant apte à produire un faisceau lumineux ayant un axe central (10) de projection, les lampes étant disposées sur le support en une matrice de lignes et de colonnes, la méthode comprenant l'étape (a) d'orienter les lampes (8) de chaque colonne au moyen du support de façon à faire converger les axes centraux (10) de leurs faisceaux lumineux vers une première zone;
la méthode étant **caractérisée en ce que** les lampes sont à faisceau étroit, et **en ce qu'**elle comprend en outre l'étape (b) d'orienter les lampes (8) de chaque ligne au moyen du support de façon à faire converger les axes centraux (10) de leurs faisceaux lumineux vers une seconde zone, les axes centraux (10) des faisceaux lumineux des lampes (8) des colonnes et des lignes convergeant respectivement vers les première et seconde zones pour chauffer un objet à distance.

14. Méthode selon la revendication 13, **caractérisée en ce que**, dans les étapes (a) et (b) d'orienter, les axes centraux (10) des faisceaux lumineux convergent vers des première et deuxième zones focales, et **en ce que** l'étape (a) d'orienter les lampes de chaque colonne comprend les étapes suivantes:
tendre un câble de tension (32) ayant des extrémités opposées fixées à une plaque flexible (18) du support, la plaque flexible (18) ayant une première surface (20) sur laquelle les lampes (8) sont disposées selon la matrice (24) de lignes et colonnes, le câble de tension (32) s'étendant le long de la première surface (20) de la plaque (18), parallèlement aux colonnes de lampes (8), une tension dans le câble de tension (32) permettant de fléchir la plaque (18) de sorte que la première surface (20) prenne une forme concave pour orienter les lampes de chacune des colonnes vers la première zone focale; et
bloquer une section de chacun de deux câbles de stabilisation (36) par rapport à la plaque (18) pour ainsi stabiliser la forme concave de la première surface (20), chacun des câbles de stabilisation (36) s'étendant le long d'une seconde surface (22) de la plaque (18) opposée à la première surface (20), les câbles de stabilisation (36) s'étendant parallèlement aux colonnes de lampes (8), chaque câble de stabilisation (36) ayant une première extrémité munie d'un ressort (50) fixé à la plaque (18) et une seconde extrémité également fixée à la plaque (18), les ressorts (50) des deux câbles de stabilisation (36) étant situés de part et d'autre des sections qui sont bloquées.

15. Méthode selon la revendication 13, **caractérisée en ce que**, dans les étapes (a) et (b) d'orienter, les axes centraux (10) des faisceaux lumineux convergent vers des première et deuxième zones focales, et **en ce que** l'étape (b) d'orienter les lampes de chaque ligne comprend l'étape de monter les lampes (8) sur une surface (20) du support en disposant des éléments d'ajustement (40) entre les lampes (8) et la surface (20) du support.

16. Méthode selon la revendication 14, **caractérisée en ce qu'**elle comprend en outre l'étape d'activer deux lasers (54) montés sur le support de façon à être alignés parallèlement aux colonnes de lampes (8) et aptes à produire des rayons lasers (56) orientés de la même façon que les axes centraux (10) de projection des faisceaux lumineux des lampes (8) des colonnes pour permettre de déterminer par une convergence des rayons lasers (56) la distance entre la première zone focale et le support.

17. Méthode selon la revendication 15, **caractérisée en ce qu'**elle comprend en outre l'étape d'activer deux lasers (55) montés sur le support de façon à être alignés parallèlement aux lignes de lampes (8) et aptes à produire des rayons lasers (57) orientés de la même façon que les axes centraux (10) de projection des faisceaux lumineux des lampes (8) des lignes pour permettre de déterminer par une convergence des rayons lasers (57) la distance entre la deuxième zone focale et le support.

18. Méthode selon la revendication 13, **caractérisée en ce que**:
dans les étapes (a) et (b) d'orienter, les axes centraux (10) des faisceaux lumineux convergent vers des première et deuxième zones focales;
les lampes (8) sont montées sur une première surface (20) d'une plaque flexible (18) du support;
l'étape (a) comprend les étapes suivantes:
tendre un câble de tension (32) ayant des extrémités opposées fixées à la plaque (18) et s'étendant le long de la première surface (20) de la plaque (18), parallèlement aux colonnes de lampes (8), une tension dans le câble de tension (32) permettant de fléchir la plaque (18) de sorte que la première surface (20) prenne une forme concave pour orienter les lampes (8) de chacune des colonnes vers la première zone focale; et
bloquer une section de chacun de deux câbles de stabilisation (36) par rapport à la plaque (18) pour ainsi stabiliser la forme concave de la première surface (20), chacun des câbles de stabilisation (36) s'étendant le long d'une seconde surface (22) de la plaque (18) opposée à la première surface (20), les câbles de stabilisation (36) s'étendant parallèlement aux colonnes de lampes (8), chaque câble de stabilisation (36) ayant une première extrémité munie d'un ressort (50) fixé à la plaque (18) et une seconde extrémité également fixée à la plaque (18), les ressorts (50) des deux câbles de stabilisation (36) étant. situés de part et d'autre des sections qui sont bloquées; et
l'étape (b) comprend l'étape de disposer des éléments d'ajustement (40) entre les lampes (8) et la plaque (18) pour orienter les lampes de chacune des lignes vers la deuxième zone focale.

19. Méthode selon la revendication 18, **caractérisée en ce qu'**elle comprend en outre les étapes suivantes:
activer une première paire de lasers (54) montée sur la plaque flexible (18) de façon à être alignée parallèlement aux colonnes des lampes (8) et apte à produire des rayons lasers (56) orientés de la même façon que les axes centraux (10) de projection des faisceaux lumineux des lampes (8) des colonnes pour permettre de déterminer par une convergence des rayons lasers (56) la distance entre la première zone focale et le support; et
activer une seconde paire de lasers (55) montée sur la plaque flexible (18) de façon à être alignée parallèlement aux lignes de lampes (8) et apte à produire des rayons lasers (57) orientés de la même façon que les axes centraux (10) de projection des faisceaux lumineux des lampes (8) des lignes pour permettre de déterminer par une convergence des rayons lasers (57) de la seconde paire la distance entre la deuxième zone focale et le support.

## Claims

1. Apparatus (2) for heating at a distance by light radiance (4), the apparatus (2) comprising a support, and lamps (8) mounted on said support, each of the lamps (8) being able to produce a luminous beam having a central axis (10) of projection, the lamps (8) being placed on the support in a matrix (24) of lines and columns, the apparatus comprising first convergence means cooperating with the support and the lamps (8) of each column to orientate the lamps (8) so as to make converge the central axes (10) of the luminous beams towards a first area ;
the apparatus (2) being **characterized by** the fact that the lamps (8) have a narrow beam, and by the fact that it further comprises second convergence means cooperating with the support and the lamps (8) of each line to orientate the lamps (8) so as to make converge the central axes (10) of their luminous beams towards a second area, the central axes (10) of the luminous beams of the lamps (8) of the columns and the lines converging respectively towards the first and second areas to heat an object at a distance.

2. The apparatus (2) according to claim 1, **characterized in that** :
the first and second convergence means are capable of making converge the central axes of the luminous beams towards first and second focal areas;
the support comprises a flexible plate (18) having first and second opposite surfaces (20,22) ; and
the first convergence means comprise:
a tension cable (32) extending along the first surface (20) in parallel to the columns of lamps (8), the tension cable (32) having opposite ends fixed to the plate (18);
tensioning means (34) for tensioning the tension cable (32) and thus make the plate (18) bend so that the first surface (20) takes a concave shape to orientate the lamps of each column towards the first focal area;
two parallel stabilization cables (36) extending along the second surface (22) in parallel to the columns of lamps (8), each of the stabilization cables (36) having a first end fitted with a spring (50) fixed to the plate (18) and also a second end fixed to the plate (18); and
clamping means (38) for clamping a section of each stabilization cable (36) with respect to the plate (18) so as to stabilize the concave shape of the first surface (20), the springs (50) of the two stabilization cables (36) being located on either side of the clamping means (38).

3. The apparatus (2) according to claim 1, **characterized in that**:
first and second convergence means are capable of making converge the central axes of the luminous beams towards the first and second focal areas; and
the second convergence means comprise adjustment elements (40) disposed between the lamps (8) and a surface (20) of the support to orientate the lamps (8) of each line with respect to this surface (20) towards the second focal area.

4. The apparatus (2) according to claims 2 or 3, **characterized in that** it further comprises two lasers (54) mounted on the support so as to be aligned in parallel to the columns of lamps (8) and able to produce laser beams (56) oriented in the same way as the central axes (10) of projection of the luminous beams of the lamps (8) of the columns so as to allow to determine by a convergence of the laser beams (56) the distance between the first focal area and the apparatus (2).

5. The apparatus (2) according to claims 2 or 3, **characterized in that** it further comprises two lasers (55) mounted on the support so as to be aligned in parallel to the lines of lamps (8) and able to produce laser beams (57) oriented in the same way as the central axes (10) of projection of the luminous beams of the lamps of the lines so as to allow to determine by a convergence of the laser beams (57) the distance between the second focal area and the apparatus (2).

6. The apparatus (2) according claim 1, **characterized in that**:
the first and second convergence means are capable of making converge the central axes of the luminous beams towards the first and second focal areas; and
the support comprises a flexible plate (18) having first and second opposite surfaces (20,22);
the lamps (8) being disposed on the first surface (20);
the first convergence means comprise:
a tension cable (32) extending along the first surface (20) in parallel to the columns of lamps (8), the tension cable (32) having opposite ends fixed to the plate (18);
tensioning means (34) for tensioning the tension cable (32) and thus bending the plate (18) so that the first surface (20) takes a concave shape to orientate the lamps (8) of each of the columns towards the first focal area;
two parallel stabilization cables (36) extending along the second surface (22) in parallel to the columns of lamps (8), each of the stabilization cables (36) having a first end provided with a spring (50) fixed to the plate (18) and a second end also fixed to the plate (18); and
clamping means (38) for clamping a section of each stabilization cable (36) with respect to the plate (18) so as to stabilize the concave shape of the first surface (20), the springs (50) of the two stabilization cables (36) being located on both sides of the clamping means (38); and
second convergence means comprising adjustment elements (40) mounted between the lamps (8) and the plate (18) to orientate the lamps (8) of each of the lines with respect to the first surface (20) of the plate (18) towards the second focal area.

7. The apparatus (2) as claimed in claim 2, **characterized in that** the tensioning means (34) comprise:
a L-shaped element (42) having a first wing fixed to the plate (18) and a second wing provided with a hole;
a rod (44) having a first end fixed to one of the ends of the tension cable (32) and a second end comprising a threaded cavity; and
a screw (46) passing through the hole of the second wing, said screw (46) having a first end cooperating with the threaded cavity of the rod (44) and a second end fitted with a handle (48) resting against the second wing, said handle (48) allowing a user to screw the screw (46) in the threaded cavity to thus adjust the tension in the tension cable (32) so as to bend the plate (18).

8. The apparatus (2) according to claim 2 or 6, **characterized in that** the blocking means (38) are mounted on the second surface (22) of the plate (18) and comprise a female jaw (58), a male jaw (60) screwed in said female jaw (58) and a handle (62) for tightening the stabilization cables (36) between said male and female jaws (60,58) by screwing said jaws with respect to one another.

9. The apparatus (2) according to claims 3 or 6, **characterized in that** the adjustment elements (40) comprise discs removably mounted between each lamp (8) and the surface (20) of the support.

10. The apparatus (2) according to claim 6, **characterized in that** it further comprises:
a first pair of lasers (54) mounted on the plate (18) so as to be aligned in parallel to the columns of lamps (8) and able to produce laser beams (56) oriented in the same way as the central axes (10) of projection of the luminous beams of the lamps (8) of the columns so as to allow to determine by a convergence of the laser beams (56) the distance between the first focal area and the apparatus (2); and
a second pair of lasers (55) mounted on the plate (18) in order to be aligned in parallel to the lines of lamps (8) and able to produce laser beams (57) oriented in the same way as the central axes (10) of projection of the luminous beams of the lamps (8) of the lines in order to determine by a convergence of the laser beams (57) produced by the second pair of lasers (55) the distance between the second focal area and the apparatus (2).

11. The apparatus (2) according to any one of claims 1 to 10, **characterized in that** it further comprises:
a base (64) mounted on wheels and comprising a cylindrical member (72);
a hinged device comprising:
a first part (67) with a first cylindrical end (74) able to slide with respect to the cylindrical member (72) of the base (64); and
a second part (65) having a first cylindrical end (78) able to receive a cylindrical connection element (100) of the support, an intermediate part connected to a second end (73) of the first part (67) through a pivot axis (82), and a second end provided with a handle (86) and a counterweight (88);
a first locking means (68) for locking the first end (74) of the first part (67) with respect to the cylindrical member (72) of the base (64); and
a second locking means (70) for locking the first part (67) with respect to the second part (65) via the pivot axis (82).

12. The apparatus (2) according to any one of claims 1 to 11, **characterized in that** each lamp (8) comprises a socket (26), a light bulb (28) screwed into the socket (26), and a tubular body (30) having a cylindrical end (90) provided with an abutment (92) able to cooperate with the corresponding socket (26), and a splayed end (94) having an internal wall (96) provided with a peripheral ring (98), the internal wall (96) being able to receive the light bulb (28), the tubular body (30) being used for aligning the light bulb (28) with respect to the socket (26).

13. Method for heating at a distance by light radiance (4), the method comprising the step to activating the lamps (8) mounted on the support, each of the lamps (8) being able to produce a luminous beam having a central axis (10) of projection , the lamps being placed on the support in a matrix of lines and columns, the method comprising a step a) of orientating the lamps (8) of each column by means of the support so as to make converge the central axes (10) of the luminous beams towards a first area;
the method **characterized in that** the lamps have a narrow beam, and further comprising a step b) of orientating the lamps (8) of each line by means of the support so as to make converge the central axes (10) of the luminous beams towards a second area, the central axes (10) of the luminous beams of the lamps (8) of the columns and the lines converging respectively towards the first and second areas to heat an object at a distance.

14. Method according to claim 13, **characterized in that**, in the steps a) and b) of orientating, the central axes (10) of the luminous beams converge towards the first and second focal areas, and **in that** step a) of orienting the lamps of each column further comprises the following steps:
tensioning a tension cable (32) having opposite ends fixed to a flexible plate (18) of the support, the flexible plate (18) having a first surface (20) onto which the lamps (8) are disposed in a matrix (24) of lines and columns, the tension cable (32) extending along the first surface (20) of the plate (18), in parallel to the columns of lamps (8), a tension in the tension cable (32) allowing to bend the plate (18) so that the first surface (20) takes a concave shape to orientate the lamps of each column towards the first focal area; and
clamping a section of each of the two stabilization cables (36) with respect to the plate (18), so as to stabilize the concave shape of the first surface (20), each of the stabilization cables (36) extending along a second surface (22) of the plate (18) opposite to the first surface (20), the stabilization cables (36) extending in parallel to the columns of lamps (8), each stabilization cable (36) having a first end provided with a spring (50) fixed to the plate (18) and a second end also fixed to the plate (18), the springs (50) of the two stabilization cables (36) being located on both sides of the sections which are clamped.

15. Method according to claim 13, **characterized in that**, in the steps a) and b) of orientating, the central axes (10) of the luminous beams converge towards the first and second focal areas, and by the fact that step b) of orienting the lamps of each line comprises the step of mounting the lamps (8) on a surface (20) of the support by disposing adjustment elements (40) between the lamps (8) and the surface (20) of the support.

16. Method according to claim 14, **characterized in that** it further comprises the step of activating two lasers (54) mounted on the support so as to be aligned in parallel to the columns of lamps (8) and able to produce laser beams (56) oriented in the same way as the central axes (10) of projection of the luminous beams of the lamps (8) of the columns so as to allow to determine by a convergence of the laser beams (56) the distance between the first focal area and the support.

17. Method according to claim 15, **characterized in that** it further comprises the step of activating two lasers (55) mounted on the support so as to be aligned in parallel to the lines of lamps (8) and able to produce laser beams (57) oriented in the same way as the central axes (10) of projection of the luminous beams of the lamps (8) of the lines so as to allow to determine by a convergence of the laser beams (57) the distance between the second focal area and the support.

18. Method according to claim 13, **characterized in that**:
in the steps a) and b) of orientating, the central axes (10) of the luminous beams converge towards the first and second focal areas;
the lamps (8) are mounted on first surface (20) of a flexible plate (18) of the support;
step a) comprises the following steps:
tensioning a tension cable (32) having opposite ends fixed to the plate (18) and extending along the first surface (20) of the plate (18), in parallel to the columns of lamps (8), a tension in the tension cable (32) allowing to bend the plate (18) so that the first surface takes a concave shape to orientate the lamps (8) of each column towards the first focal area; and
clamping a section of each of the two stabilization cables (36) with respect to the plate (18) so as to stabilize the concave shape of the first surface (20), each of the stabilization cables (36) extending along a second surface (22) of the plate (18) opposite to the first surface (20), the stabilization cables (36) extending in parallel to the columns of lamps (8), each stabilization cable (36) having a first end provided with a spring (50) fixed to the plate (18) and a second end also fixed to the plate (18), the springs (50) of the two stabilization cables (36) being located on both sides of the sections which are clamped; and
step b) comprising a step of disposing adjustment elements (40) between the lamps (8) and the plate (18) to orientate the lamps of each of the lines towards the second focal area.

19. Method according to claim 18, **characterised in that** it further comprises the following steps:
activating a first pair of lasers (54) mounted on a flexible plate (18) so as to be aligned in parallel to the columns of lamps (8) and able to produce laser beams (56) oriented in the same way as the central axes (10) of projection of the luminous beams of the lamps (8) of the columns so as to allow to determine by a convergence of the laser beams (56) the distance between the first focal area and the support; and
activating a second pair of lasers (55) mounted on a flexible plate (18) so as to be aligned in parallel to the lines of lamps (8) and able to produce laser beams (57) oriented in the same way as the central axes (10) of projection of the luminous beams of the lamps (8) of the lines in order to be able to determine by a convergence of the laser beams (57) of the second pair the distance between the second focal area and the support.

## Patentansprüche

1. Vorrichtung (2) zum Fernerwärmen durch Lichtstrahlung (4), wobei die Vorrichtung (2) einen Träger sowie an dem Träger angebrachte Lampen (8) umfasst, wobei jede der Lampen (8) ein Lichtstrahlenbündel mit einer Projektionsmittelachse (10) erzeugen kann, wobei die Lampen (8) an dem Träger matrixförmig (24) in Zeilen und Spalten angeordnet sind, wobei die Vorrichtung erste Konvergenzmittel umfasst, die mit dem Träger und mit den Lampen (8) jeder Spalte zusammenwirken, um diese in der Weise zu orientieren, dass die Mittelachsen (10) ihrer Lichtstrahlenbündel zu einer ersten Zone konvergieren;
wobei die Vorrichtung (2) **dadurch gekennzeichnet ist, dass** die Lampen (8) ein schmales Strahlenbündel besitzen und dass sie außerdem zweite Konvergenzmittel umfasst, die mit dem Träger und mit den Lampen (8) jeder Zeile zusammenwirken, um diese in der Weise zu orientieren, dass die Mittelachsen (10) ihrer Lichtstrahlenbündel zu einer zweiten Zone konvergieren, wobei die Mittelachsen (10) der Lichtstrahlenbündel der Lampen (8) der Spalten und der Zeilen zu der ersten bzw. der zweiten Zone konvergieren, um ein entferntes Objekt zu erwärmen.

2. Vorrichtung (2) nach Anspruch 1, **dadurch gekennzeichnet, dass**:
die ersten und die zweiten Konvergenzmittel die Mittelachsen der Lichtstrahlenbündel zu einer ersten und einer zweiten Fokalzone konvergieren lassen können;
der Träger eine flexible Platte (18) umfasst, die eine erste und eine zweite Oberfläche (20, 22), die einander gegenüberliegen, besitzt; und
die ersten Konvergenzmittel umfassen:
ein Zugseil (32), das sich längs der ersten Oberfläche (20) parallel zu den Spalten von Lampen (8) erstreckt und gegenüberliegende Enden besitzt, die an der Platte (18) befestigt sind;
Zugmittel (34), die das Zugseil (32) spannen und dadurch die Platte (18) in der Weise durchbiegen, dass die erste Oberfläche (20) eine konkave Form annimmt, um die Lampen jeder der Spalten zu der ersten Fokalzone zu orientieren;
zwei parallele Stabilisierungsseile (36), die sich längs der zweiten Oberfläche (22) parallel zu den Spalten von Lampen (8) erstrecken, wobei jedes der Stabilisierungsseile (36) ein erstes Ende, das mit einer an der Platte (18) befestigten Feder (50) versehen ist, und ein zweites Ende, das ebenfalls an der Platte (18) befestigt ist, besitzt; und
Blockiermittel (38), die einen Abschnitt jedes Stabilisierungsseils (36) in Bezug auf die Platte (18) blockieren, um dadurch die konkave Form der ersten Oberfläche (20) zu stabilisieren, wobei sich die Federn (50) der zwei Stabilisierungsseile (36) beiderseits der Blockiermittel (38) befinden.

3. Vorrichtung (2) nach Anspruch 1, **dadurch gekennzeichnet, dass**:
die ersten und zweiten Konvergenzmittel die Mittelachsen der Lichtstrahlenbündel zu der ersten bzw. zu der zweiten Fokalzone konvergieren lassen können; und
die zweiten Konvergenzmittel Einstellelemente (40) umfassen, die zwischen den Lampen (8) und einer Oberfläche (20) des Trägers angebracht sind, um die Lampen (8) jeder der Zeilen in Bezug auf diese Oberfläche (20) zu der zweiten Fokalzone zu orientieren.

4. Vorrichtung (2) nach Anspruch 2 oder 3, **dadurch gekennzeichnet, dass** sie außerdem zwei Laser (54) umfasst, die an dem Träger in der Weise angebracht sind, dass sie parallel auf die Spalten von Lampen (8) ausgerichtet sind, und Laserstrahlen (56) erzeugen können, die in derselben Weise wie die Projektionsmittelachsen (10) der Lichtstrahlenbündel der Lampen (8) der Spalten orientiert sind, um eine Bestimmung des Abstandes zwischen der ersten Fokalzone und der Vorrichtung (2) durch eine Konvergenz der Laserstrahlen (56) zu ermöglichen.

5. Vorrichtung (2) nach Anspruch 2 oder 3, **dadurch gekennzeichnet, dass** sie außerdem zwei Laser (55) umfasst, die an dem Träger in der Weise angebracht sind, dass sie parallel auf die Zeilen von Lampen (8) ausgerichtet sind, und Laserstrahlen (57) erzeugen können, die in derselben Weise wie die Projektionsmittelachsen (10) der Lichtstrahlenbündel der Lampen der Zeilen orientiert sind, um eine Bestimmung des Abstandes zwischen der zweiten Fokalzone und der Vorrichtung (2) durch eine Konvergenz der Laserstrahlen (57) zu ermöglichen.

6. Vorrichtung (2) nach Anspruch 1, **dadurch gekennzeichnet, dass**:
die ersten und die zweiten Konvergenzmittel die Mittelachsen der Lichtstrahlenbündel zu der ersten bzw. zu der zweiten Fokalzone konvergieren lassen können; und
der Träger eine flexible Platte (18) umfasst, die eine erste und eine zweite Oberfläche (20, 22) besitzt, die einander gegenüberliegen;
wobei die Lampen (8) auf der ersten Oberfläche (20) angeordnet sind;
wobei die ersten Konvergenzmittel umfassen:
ein Zugseil (32), das sich längs der ersten Oberfläche (20) parallel zu den Spalten von Lampen (8) erstreckt und gegenüberliegende Enden besitzt, die an der Platte (18) befestigt sind;
Zugmittel (34), die das Zugseil (32) spannen und dadurch die Platte (18) in der Weise durchbiegen, dass die erste Oberfläche (20) eine konkave Form annimmt, um die Lampen (8) jeder der Spalten zu der ersten Fokalzone zu orientieren;
zwei parallele Stabilisierungsseile (36), die sich längs der zweiten Oberfläche (22) parallel zu den Spalten von Lampen (8) erstrecken, wobei jedes der Stabilisierungsseile (36) ein erstes Ende, das mit einer an der Platte (18) befestigten Feder (50) versehen ist, und ein zweites Ende, das ebenfalls an der Platte (18) befestigt ist, besitzt; und
Blockiermittel (38), die einen Abschnitt jedes Stabilisierungsseils (36) in Bezug auf die Platte (18) blockieren, um somit die konkave Form der ersten Oberfläche (20) zu stabilisieren, wobei sich die Federn (50) der zwei Stabilsierungsseile (36) beiderseits der Blockiermittel (38) befinden; und
die zweiten Konvergenzmittel Einstellelemente (40) umfassen, die zwischen den Lampen (8) und der Platte (18) angebracht sind, um die Lampen (8) jeder der Zeilen in Bezug auf die erste Oberfläche (20) der Platte (18) zu der zweiten Fokalzone zu orientieren.

7. Vorrichtung (2) nach Anspruch 2, **dadurch gekennzeichnet, dass** die Zugmittel (34) umfassen:
ein Element (42) in L-Form, das einen ersten Schenkel, der an der Platte (18) befestigt ist, und einen zweiten Schenkel, der mit einem Loch versehen ist, besitzt;
einen Stift (44), wovon ein erstes Ende an einem der Enden des Zugseils (32) befestigt ist und ein zweites Ende einen mit Gewinde versehenen Hohlraum aufweist; und
eine Schraube (46), die durch das Loch des zweiten Schenkels verläuft und wovon ein erstes Ende mit dem mit Gewinde versehenen Hohlraum des Stifts (44) zusammenwirkt und ein zweites Ende mit einem Griff (48) versehen ist, der sich auf dem zweiten Schenkel abstützt, wobei der Griff (48) einem Anwender ermöglicht, die Schraube (46) in den mit Gewinde versehenen Hohlraum zu schrauben, um somit den Zug im Zugseil (32) in der Weise einzustellen, dass die Platte (18) durchgebogen wird.

8. Vorrichtung (2) nach Anspruch 2 oder 6, **dadurch gekennzeichnet, dass** die Blockiermittel (38) an der zweiten Oberfläche (22) der Platte (18) angebracht sind und eine Buchsenklemmbacke (58), eine Steckklemmbacke (60), die in die Buchsenklemmbacke (58) geschraubt ist, sowie einen Griff (62) zum Festklemmen der Stabilisierungsseile (36) zwischen den Steck- und Buchsenklemmbacken (60, 58) durch Verschrauben der Klemmbacken (60, 58) miteinander umfassen.

9. Vorrichtung (2) nach Anspruch 3 oder 6, **dadurch gekennzeichnet, dass** die Einstellelemente (40) Scheiben umfassen, die zwischen jeder Lampe (8) und der Oberfläche (20) des Trägers lösbar angebracht sind.

10. Vorrichtung (2) nach Anspruch 6, **dadurch gekennzeichnet, dass** sie außerdem umfasst:
ein erstes Paar Laser (54), die an der Platte (18) in der Weise angebracht sind, dass sie parallel auf die Spalten von Lampen (8) ausgerichtet sind und Laserstrahlen (56) erzeugen können, die in derselben Weise wie die Projektionsmittelachsen (10) der Lichtstrahlenbündel der Lampen (8) der Spalten orientiert sind, um eine Bestimmung des Abstandes zwischen der ersten Fokalzone und der Vorrichtung (2) durch eine Konvergenz der Laserstrahlen (56) zu ermöglichen; und
ein zweites Paar Laser (55), die an der Platte (18) in der Weise angebracht sind, dass sie parallel auf die Zeilen von Lampen (8) ausgerichtet sind und Laserstrahlen (57) erzeugen können, die in derselben Weise wie die Projektionsmittelachsen (10) der Lichtstrahlenbündel der Lampen (8) der Zeilen orientiert sind, um eine Bestimmung des Abstandes zwischen der zweiten Fokalzone und der Vorrichtung (2) durch eine Konvergenz der durch das zweite Laserpaar (55) erzeugten Laserstrahlen zu ermöglichen.

11. Vorrichtung (2) nach einem der Ansprüche 1 bis 10, **dadurch gekennzeichnet, dass** sie außerdem umfasst:
eine Basis (64), die an Rädern angebracht ist und ein zylindrisches Element (72) umfasst;
eine Gelenkvorrichtung, die umfasst:
einen ersten Teil (67), der ein erstes zylindrisches Ende (74) besitzt, das in Bezug auf das zylindrische Element (72) der Basis (64) gleiten kann; und
einen zweiten Teil (65), der ein erstes zylindrisches Ende (78), das ein zylindrisches Verbindungselement (100) des Trägers aufnehmen kann, einen Zwischenteil, der mit einem zweiten Ende (73) des ersten Teils (67) über eine Schwenkachse (82) verbunden ist, und ein zweites Ende, das mit einem Griff (86) und einem Gegengewicht (88) versehen ist, besitzt;
ein erstes Verriegelungsmittel (68), das das erste Ende (74) des ersten Teils (67) in Bezug auf das zylindrische Element (72) der Basis (64) verriegelt; und
ein zweites Verriegelungsmittel (70), das den ersten Teil (67) in Bezug auf den zweiten Teil (65) über die Schwenkachse (82) verriegelt.

12. Vorrichtung (2) nach einem der Ansprüche 1 bis 11, **dadurch gekennzeichnet**, das jede Lampe (8) eine Fassung (26), einen in die Fassung (26) geschraubten Kolben (28) und einen rohrförmigen Körper (30) mit einem zylindrischen Ende (90), das mit einem Anschlag (92) versehen ist, der mit der entsprechenden Fassung (26) zusammenwirken kann, und mit einem erweiterten Ende (94), das eine Innenwand (96) besitzt, die mit einer Umfangsscheibe (98) versehen ist, umfasst, wobei die Innenwand (96) den Kolben aufnehmen kann und wobei der rohrförmige Körper (30) dazu dient, den Kolben (28) in Bezug auf die Fassung (26) auszurichten.

13. Verfahren zum Fernerwärmen durch Lichtstrahlung (4), wobei das Verfahren den Schritt umfasst, bei dem an einem Träger angebrachte Lampen (8) gespeist werden, wobei jede der Lampen (8) ein Lichtstrahlenbündel mit einer Projektionsmittelachse (10) erzeugen kann, wobei die Lampen an dem Träger matrixförmig in Zeilen und Spalten angeordnet sind, wobei das Verfahren den Schritt (a) umfasst, bei dem die Lampen (8) jeder Spalte mittels des Trägers in der Weise orientiert werden, dass die Mittelachsen (10) ihrer Lichtstrahlenbündel zu einer ersten Zone konvergieren;
wobei das Verfahren **dadurch gekennzeichnet ist, dass** die Lampen ein schmales Strahlenbündel besitzen und dass es außerdem den Schritt (b) umfasst, bei dem die Lampen (8) jeder Zeile mittels des Trägers in der Weise orientiert werden, dass die Mittelachsen (10) ihrer Lichtstrahlenbündel zu einer zweiten Zone konvergieren, wobei die Mittelachsen (10) der Lichtstrahlenbündel der Lampen (8) der Spalten und der Zeilen zu der ersten bzw. zu der zweiten Zone konvergieren, um ein entferntes Objekt zu erwärmen.

14. Verfahren nach Anspruch 13, **dadurch gekennzeichnet, dass** in den Schritten (a) und (b) des Orientierens die Mittelachsen (10) der Lichtstrahlenbündel zu einer ersten und zu einer zweiten Fokalzone konvergieren und dass der Schritt (a) des Orientierens der Lampen jeder Spalte die folgenden Schritte umfasst:
Spannen eines Zugseils (32), das gegenüberliegende Enden besitzt, die an einer flexiblen Platte (18) des Trägers befestigt sind, wobei die flexible Platte (18) eine erste Oberfläche (20) besitzt, auf der die Lampen (8) in einer Matrix (24) aus Zeilen und Spalten angeordnet sind, wobei sich das Zugseil (32) längs der ersten Oberfläche (20) der Platte (18) parallel zu den Spalten von Lampen (8) erstreckt, wobei ein Zug in dem Zugseil (32) ermöglicht, die Platte (18) in der Weise durchzubiegen, dass die erste Oberfläche (20) eine konkave Form annimmt, um die Lampen jeder der Spalten zu der ersten Fokalzone zu orientieren; und
Blockieren eines Abschnitts jedes von zwei Stabilisierungsseilen (36) in Bezug auf die Platte (18), um somit die konkave Form der ersten Oberfläche (20) zu stabilisieren, wobei sich jedes der Stabilisierungsseile (36) längs einer zweiten Oberfläche (22) der Platte (18), die der ersten Oberfläche (20) gegenüberliegt, erstreckt, wobei sich die Stabilisierungsseile (36) parallel zu den Spalten von Lampen (8) erstrecken, wobei jedes Stabilisierungsseil (36) ein erstes Ende, das mit einer an der Platte (18) befestigten Feder (50) versehen ist, und ein zweites Ende, das ebenfalls an der Platte (18) befestigt ist, besitzt, wobei sich die Federn (50) der zwei Stabilisierungsseile (36) beiderseits der blockierten Abschnitte befinden.

15. Verfahren nach Anspruch 13, **dadurch gekennzeichnet, dass** in den Schritten (a) und (b) des Orientierens die Mittelachsen (10) der Lichtstrahlenbündel zu einer ersten und einer zweiten Fokalzone konvergieren und dass der Schritt (b) des Orientierens der Lampen jeder Zeile den Schritt des Anbringens der Lampen (8) an einer Oberfläche (20) des Trägers durch Anordnen von Einstellelementen (40) zwischen den Lampen (8) und der Oberfläche (20) des Trägers umfasst.

16. Verfahren nach Anspruch 14, **dadurch gekennzeichnet, dass** es außerdem den Schritt umfasst, bei dem zwei Laser (54) aktiviert werden, die an dem Träger in der Weise angebracht sind, dass sie parallel auf die Spalten von Lampen (8) ausgerichtet sind, und Laserstrahlen (56) erzeugen können, die in der gleichen Weise wie die Projektionsmittelachsen (10) der Lichtstrahlenbündel der Lampen (8) der Spalten orientiert sind, um eine Bestimmung des Abstandes zwischen der ersten Fokalzone und dem Träger durch eine Konvergenz der Laserstrahlen (56) zu ermöglichen.

17. Verfahren nach Anspruch 15, **dadurch gekennzeichnet, dass** es außerdem den Schritt umfasst, bei dem zwei Laser (55) aktiviert werden, die an dem Träger in der Weise angebracht sind, dass sie parallel auf die Zeilen von Lampen (8) ausgerichtet sind, und Laserstrahlen (57) erzeugen können, die in derselben Weise wie die Projektionsmittelachsen (10) der Lichtstrahlenbündel der Lampen (8) der Zeilen orientiert sind, um eine Bestimmung des Abstandes zwischen der zweiten Fokalzone und dem Träger durch eine Konvergenz der Laserstrahlen (57) zu ermöglichen.

18. Verfahren nach Anspruch 13, **dadurch gekennzeichnet, dass**:
in den Schritten (a) und (b) des Orientierens die Mittelachsen (10) der Lichtstrahlenbündel zu einer ersten und einer zweiten Fokalzone konvergieren;
die Lampen (8) an einer ersten Oberfläche (20) einer flexiblen Platte (18) des Trägers angebracht sind;
der Schritt (a) die folgenden Schritte umfasst:
Spannen eines Zugseils (32), das gegenüberliegende Enden besitzt, die an der Platte (18) befestigt sind und sich längs der ersten Oberfläche (20) der Platte (18) parallel zu den Spalten von Lampen (8) erstrecken, wobei ein Zug in dem Zugseil (32) ermöglicht, die Platte (18) in der Weise durchzubiegen, dass die erste Oberfläche (20) eine konkave Form annimmt, um die Lampen (8) jeder der Spalten zu der ersten Fokalzone zu orientieren; und
Blockieren eines Abschnitts jedes von zwei Stabilisierungsseilen (36) in Bezug auf die Platte (18), um somit die konkave Form der ersten Oberfläche (20) zu stabilisieren, wobei sich jedes der Stabilisierungsseile (36) längs einer zweiten Oberfläche (22) der Platte (18), die der ersten Oberfläche (20) gegenüberliegt, erstreckt, wobei sich die Stabilisierungsseile (36) parallel zu den Spalten von Lampen (8) erstrecken, wobei jedes Stabilisierungsseil (36) ein erstes Ende, das mit einer an der Platte (18) befestigten Feder (50) versehen ist, und ein zweites Ende, das ebenfalls an der Platte (18) befestigt ist, besitzt, wobei sich die Federn (50) der zwei Stabilisierungsseile (36) beiderseits der blockierten Abschnitte befinden; und
der Schritt (b) den Schritt umfasst, bei dem Einstellelemente (40) zwischen den Lampen (8) und der Platte (18) angeordnet werden, um die Lampen jeder der Zeilen zu der zweiten Fokalzone zu orientieren.

19. Verfahren nach Anspruch 18, **dadurch gekennzeichnet, dass** es außerdem die folgenden Schritte umfasst:
Aktivieren eines ersten Paars Laser (54), die an der flexiblen Platte (18) in der Weise angebracht sind, dass sie parallel auf die Spalten von Lampen (8) ausgerichtet sind, und Laserstrahlen (56) erzeugen können, die in derselben Weise wie die Projektionsmittelachsen (10) der Lichtstrahlenbündel der Lampen (8) der Spalten orientiert sind, um eine Bestimmung des Abstandes zwischen der ersten Fokalzone und dem Träger durch eine Konvergenz der Laserstrahlen (56) zu ermöglichen; und
Aktivieren eines zweiten Paars Laser (55), die an der flexiblen Platte (18) in der Weise angebracht sind, dass sie parallel auf die Zeilen von Lampen (8) ausgerichtet ist, und Laserstrahlen (57) erzeugen können, die in der gleichen Weise wie die Projektionsmittelachsen (10) der Lichtstrahlenbündel der Lampen (8) der Zeilen orientiert sind, um eine Bestimmung des Abstandes zwischen der zweiten Fokalzone und dem Träger durch eine Konvergenz der Laserstrahlen (57) des zweiten Teils zu ermöglichen.
